# EUROPÄISCHE PATENTSCHRIFT

(11) **EP 1 815 200 B1**
(45) Veröffentlichungstag und Bekanntmachung des Hinweises auf die Patenterteilung: **06.03.2013**
(21) Anmeldenummer: 05808290.0
(22) Anmeldetag: 09.11.2005
(51) Int. Cl.: F26B 15/14, B65G 13/00

(54) **TROCKNER**
DRIER
SECHOIR

(30) Priorität: 23.11.2004 DE 102004056404
(43) Veröffentlichungstag der Anmeldung: 08.08.2007
(73) Patentinhaber: Dürr Systems GmbH, 74321 Bietigheim-Bissingen (DE)
(72) Erfinder: ORTLIEB, Konrad, 70186 Stuttgart (DE); ZURICH, Helmut, 48607 Ochtrup (DE); WESCHKE, Jürgen, 72163 Weil der Stadt (DE); NÄPFEL, Peter, 71731 Tamm (DE); FÖTTINGER, Manfred, 35463 Fernwald (DE); STRAUSS, Rudolf, 74321 Bietigheim-Bissingen (DE)
(74) Vertreter: Hörner, Andreas
(86) Internationale Anmeldenummer: PCT/EP2005/012000
(87) Internationale Veröffentlichungsnummer: WO 2006/056318

(56) Entgegenhaltungen:
- EP-A- 0 149 694
- EP-A- 0 255 620
- EP-A- 0 436 081
- EP-A- 1 424 268
- EP-A- 1 510 477
- WO-A-2004/081476
- DE-A1- 4 007 707
- DE-A1- 10 062 084
- DE-U1- 20 211 083
- US-A- 2 077 189
- US-A- 4 901 845
- US-A- 5 217 374
- US-A- 5 661 912
- US-A1- 2001 030 108
- US-A1- 2002 148 137
- US-A1- 2003 042 113
- US-B1- 6 269 941

## Beschreibung

Die vorliegende Erfindung betrifft einen Trockner zum Trocknen von oberflächenbehandelten Werkstücken, insbesondere Fahrzeugkarosserien, die auf jeweils einem Werkstückträger angeordnet sind, wobei der Trockner ein Trocknergehäuse mit einem Trocknertunnel, durch welchen die Werkstücke längs einer Förderrichtung hindurchbewegt werden und welcher nach unten durch einen Trocknerboden begrenzt wird, der mehrere Bodenelemente umfasst, und eine Fördervorrichtung, welche die Werkstücke durch den Trocknertunnel hindurchfördert, umfasst.

Solche Trockner sind aus dem Stand der Technik, insbesondere aus der WO 2004/081476 A, bekannt.

Bei den bekannten Trocknern ist die Fördervorrichtung, welche die Werkstücke durch den Trocknertunnel hindurchfördert, beispielsweise als ein Tragkettenförderer ausgebildet, bei dem eine auf einem Skidrahmen angeordnete Fahrzeugkarosserie über eine Schnellabzugsbahn auf eine Kette mit Traggliedern aufgesetzt wird bzw. über einen Schnellanzug von der Kette abgeführt wird und auf der Kette durch den Trockner gefördert wird. Zum Antreiben und Spannen der Kette befindet sich am Anfang und Ende der Fördervorrichtung eine Antriebs- und Spannstation mit außerhalb des Trocknergehäuses angeordneten Antriebs- und Spannelementen.

Bei der Montage der bekannten Trockner wird zunächst das Trocknergehäuse mit dem Trocknertunnel montiert, und anschließend werden in den Trocknertunnel die Komponenten der Fördertechnik, wie Bodenverankerungen, Förderermodule, Antriebs- und Spannstationen eingebracht, auf den Bodenplatten verschweißt und zusammenmontiert. Zum Schluss wird - im Falle eines Tragkettenförderers - die Tragkette eingezogen. Dabei erschweren die Zugänglichkeit des Trocknertunnels von nur zwei Seiten und die beengten Platzverhältnisse im Trocknertunnel die Montage der Fördervorrichtung vor Ort.

Die US 2002/0148137 A1 offenbart einen Trockner gemäß dem Oberbegriff von Anspruch 1.

Der vorliegenden Erfindung liegt die Aufgabe zugrunde, einen Trockner der eingangs genannten Art zu schaffen, welcher einfach montierbar ist.

Diese Aufgabe wird bei einem Trockner mit den Merkmalen des Oberbegriffs von Anspruch 1 erfindungsgemäß dadurch gelöst, dass die Tragrolleneinheiten in den Trocknerboden integriert sind, separat an jeweils einem Bodenelement des Trocknerbodens montiert sind und mit dem jeweiligen Bodenelement eine vormontierte Einheit bilden.

Der erfindungsgemäßen Lösung liegt somit das Konzept zugrunde, die zur Bildung des Trocknerbodens verwendeten Bodenelemente zusätzlich für die Aufnahme von fördertechnischen Komponenten mitzunutzen und somit die Tragrolleneinheiten der Fördervorrichtung in den Trocknerboden zu integrieren.

Dies bietet den Vorteil, dass nach der Montage der Tragrolleneinheiten an dem jeweiligen Bodenelement das Bodenelement mit der Tragrolleneinheit als eine vormontierte Einheit handhabbar ist, welche als Ganzes an den Installationsort des Trockners gebracht werden und dort mit den übrigen Bestandteilen des Trockners vereinigt werden kann.

Es ist also nicht erforderlich, die Tragrolleneinheiten nach der Fertigstellung des Trockners durch den Eingang oder Ausgang des Trocknertunnels in den Trocknertunnel einzubringen und dann im Trockner zu montieren.

Durch die Verwendung von mechanisch und elektrisch vormontierten Einheiten für die Fördertechnik und den Trocknerboden ergibt sich eine wesentliche Vereinfachung und Beschleunigung der Montage auf der Baustelle des Trockners.

Ferner ist es besonders einfach, die Fördertechnik und das Trocknergehäuse aufeinander abzustimmen. Fördertechnik und Trocknergehäuse können von demselben Konstruktionsbüro geplant und in derselben Fertigungsstätte gemeinsam hergestellt werden, was die Anzahl der bei der Planung und Herstellung erforderlichen Schnittstellen reduziert.

Die erfindungsgemäße Fördertechnik ist durch die Verwendung der einzeln und unabhängig voneinander montierbaren und/oder demontierbaren Tragrolleneinheiten modular aufgebaut. Jedes dieser Module besteht aus wenigen Komponenten wie beispielsweise Rollenbock, Wellen und Getriebe. Diese wenigen Komponenten können für eine Vielzahl verschiedener Trocknerkonstruktionen verwendet werden, so dass sie in großer Stückzahl am Lager gehalten werden können. Bei einer konkreten Auftragsabwicklung kann das benötigte Material aus einem solchen Lager entnommen werden, was die Fertigungszeit deutlich reduziert.

Ferner bietet die erfindungsgemäße Fördervorrichtung mit den in den Trocknerboden integrierten Tragrollen den Vorteil, dass sie nur wenig oder gar nicht über den Boden des Trocknertunnels nach oben übersteht, so dass die Höhe des Trocknergehäuses um die Höhe einer sonst erforderlichen, auf den Trocknerboden aufgesetzten Fördervorrichtung (von bis zu 50 cm) reduziert werden kann.

Bei der erfindungsgemäßen Lösung bilden die in den Trocknerboden integrierten Tragrolleneinheiten eine Rollenbahn, die aber nicht als Einheit außerhalb des Trockners und unabhängig von dem Trockner zusammengesetzt und anschließend in den Trocknertunnel eingebracht wird, sondern durch Montage der einzelnen Tragrolleneinheiten an jeweils einem Bodenelement des Trocknerbodens bereits vor der Bildung des Trocknertunnels in den Trocknerboden integrierbar ist.

Die Werkstückträger können insbesondere als Skidrahmen ausgebildet sein.

Unter einem "Skidrahmen" ist dabei ein Werkstückträger zu verstehen, der mindestens zwei Skidkufen umfasst, welche längs der Förderrichtung der Werkstücke ausgerichtet und quer zur Förderrichtung der Werkstücke voneinander beabstandet sind, wobei jede Skidkufe eine Auflagefläche zum Abstützen des Skidrahmens an der Fördervorrichtung, insbesondere an einer Rollenbahn, aufweist.

Dabei können die Skidkufen des Skidrahmens direkt an das Werkstück montiert werden, so dass das Werkstück selbst die Verbindung der Skidkufen untereinander übernimmt.

Bei einer besonderen Ausgestaltung der Erfindung ist vorgesehen, dass die Tragrolleneinheiten jeweils nur eine Tragrolle aufweisen.

Alternativ hierzu kann auch vorgesehen sein, dass die Tragrolleneinheiten jeweils genau zwei Tragrollen aufweisen, welche im wesentlichen koaxial zueinander angeordnet sind.

Bei einer bevorzugten Ausgestaltung der Erfindung ist vorgesehen, dass die Bodenelemente tragende Elemente des Trocknerbodens sind.

Diese Bodenelemente können insbesondere als Profilelemente ausgebildet sein.

Für die mechanische Stabilität des Trocknerbodens und der Fördervorrichtung ist es besonders günstig, wenn die Bodenelemente einen U-förmigen oder einen hutförmigen Querschnitt aufweisen.

An den Bodenelementen können insbesondere Füße festgelegt sein, mit denen sich der Trockner an einem Untergrund des Trockners abstützt.

Um die erforderliche Höhe des Trocknergehäuses möglichst niedrig zu halten, kann vorgesehen sein, dass die Bodenelemente jeweils eine Aufnahme aufweisen, in welcher eine dem jeweiligen Bodenelement zugeordnete Tragrolleneinheit zumindest teilweise aufgenommen ist, damit die Tragrolleneinheit möglichst wenig über den Trocknerboden nach oben vorsteht.

Bei einer bevorzugten Ausgestaltung der Erfindung ist vorgesehen, dass sich die Bodenelemente quer, vorzugsweise im wesentlichen senkrecht, zur Förderrichtung erstrecken.

Die mechanische Stabilität des Trocknerbodens und der Fördervorrichtung wird weiter erhöht, wenn mehrere Bodenelemente, an denen jeweils mindestens eine Tragrolleneinheit montiert ist, mittels mindestens eines Versteifungselements miteinander verbunden sind.

Auch diese Versteifungselemente können als Profilelemente mit einem U-förmigen oder einem hutförmigen Querschnitt ausgebildet sein.

Für Wartungs- und Reparaturzwecke ist es besonders günstig, wenn die Tragrolleneinheiten lösbar an dem jeweils zugeordneten Bodenelement montiert sind.

Um zu vermeiden, dass Schmutz von den fördertechnischen Komponenten in den Trocknertunnel gelangt, ist vorteilhafterweise vorgesehen, dass die Bodenelemente mit einer Abdeckung versehen sind, welche jeweils mindestens eine Durchtrittsöffnung für eine Tragrolle einer Tragrolleneinheit aufweist.

Diese Abdeckung ist vorzugsweise von dem jeweils zugeordneten Bodenelement abnehmbar, um den unter der Abdeckung liegenden Bereich des Bodenelements für Wartungs- und Reparaturzwecke zugänglich zu machen.

Ferner hat es sich als günstig erwiesen, wenn die Tragrolleneinheiten jeweils mindestens eine Tragrollenwelle umfassen, die für Wartungszwecke lösbar an einem Rollenbock gelagert ist.

Insbesondere kann vorgesehen sein, dass die Tragrollenwellen jeweils ein Wellenprofil und eine lösbar an dem Wellenprofil festgelegte, insbesondere festgeschraubte, Hülse aufweisen.

Für einen einfachen Austausch der Tragrollenwellen ist es günstig, wenn die Tragrollenwellen nach Lösen der mindestens einen Hülse aus dem jeweils zugeordneten Rollenbock entnehmbar sind.

Bei einer bevorzugten Ausgestaltung der Erfindung ist vorgesehen, dass die Fördervorrichtung eine Antriebsvorrichtung zum Antreiben mindestens einer Tragrolle einer Tragrolleneinheit zu einer Drehbewegung umfasst. In diesem Fall kann der Transport der auf den Werkstückträgern angeordneten Werkstücke durch den Trocknertunnel mittels der Tragrollen der Fördervorrichtung erfolgen, und es ist kein weiterer Antrieb, insbesondere kein Kettenantrieb, für diese Translationsbewegung erforderlich.

Durch den Wegfall der Förderkette entfällt der Kettenabrieb, der sonst in bestimmten Intervallen in einer Reinigungsprozedur aus dem Trockner entfernt werden muss. Ferner entfällt die notwendige Schmierung der Kette, so dass auch kein überschüssiges Schmierfett durch die Luftströmung im Trockner aufgewirbelt werden und beispielsweise in die Lackschicht lackierter Werkstücke eingetragen werden kann. Der Wartungsaufwand der Fördervorrichtung ist durch den Verzicht auf eine Kette besonders niedrig. Außerdem kann durch den Verzicht auf eine Kette auch kein Kettenbruch auftreten.

Die Antriebsvorrichtung zum Antreiben mindestens einer Tragrolleneinheit zu einer Drehbewegung umfasst vorzugsweise einen Antriebsmotor, der beispielsweise als ein Getriebemotor ausgebildet sein kann.

Bei einer bevorzugten Ausgestaltung der Erfindung ist vorgesehen, dass der Antriebsmotor außerhalb des Trocknergehäuses angeordnet ist.

Grundsätzlich kann für jede angetriebene Tragrolle jeweils ein gesonderter Antriebsmotor vorgesehen sein, was es ermöglicht, jede angetriebene Tragrolle mit einer individuellen Drehzahl und Drehrichtung anzutreiben.

Alternativ hierzu kann auch vorgesehen sein, dass mehrere angetriebene Tragrollen mittels desselben Antriebsmotors angetrieben werden.

Um in der Förderrichtung vor und hinter dem Antriebsmotor liegende angetriebene Tragrollen antreiben zu können, ist es günstig, wenn der Antriebsmotor mehrere Abtriebswellen aufweist.

Ferner ist vorzugsweise vorgesehen, dass die Antriebsvorrichtung mindestens eine Verbindungswelle zur Übertragung einer Drehbewegung von einem Element der Antriebsvorrichtung auf ein anderes umfasst.

Mindestens eine der Verbindungswellen kann quer, vorzugsweise im wesentlichen senkrecht, zu der Förderrichtung ausgerichtet sein. Solche Verbindungswellen eignen sich dazu, eine Drehbewegung in der Längsrichtung der Bodenelemente, insbesondere von einer an der Wand des Trocknergehäuses angeordneten Getriebeeinheit auf eine Tragrolleneinheit, zu übertragen.

Ferner kann vorgesehen sein, dass mindestens eine der Verbindungswellen im wesentlichen parallel zur Förderrichtung ausgerichtet ist. Solche Verbindungswellen eignen sich insbesondere dazu, die Drehbewegung vom Antriebsmotor auf in der Förderrichtung vor oder hinter dem Antriebsmotor liegende Tragrolleneinheiten zu übertragen.

Vorzugsweise ist mindestens eine der Verbindungswellen, insbesondere eine der im wesentlichen parallel zur Förderrichtung ausgerichteten Verbindungswellen, außerhalb des Trocknergehäuses angeordnet.

Um die Drehbewegung von einer angetriebenen Tragrolle auf eine weitere Tragrolle zu übertragen, kann vorgesehen sein, dass mindestens eine der Verbindungswellen zwischen zwei Tragrollen angeordnet ist.

Um einen Versatz oder eine nicht exakt koaxiale Ausrichtung zweier Elemente der Antriebsvorrichtung, die mittels einer Verbindungswelle miteinander verbunden sind, auszugleichen, ist es günstig, wenn mindestens eine der Verbindungswellen über mindestens eine flexible Kupplung mit einer Tragrolle oder mit einem Antriebsmotor oder mit einer Getriebeeinheit verbunden ist.

Bei einer bevorzugten Ausgestaltung der Erfindung ist vorgesehen, dass die Antriebsvorrichtung mindestens eine Getriebeeinheit umfasst.

Eine solche Getriebeeinheit kann insbesondere an einem Wandelement des Trocknergehäuses angeordnet sein.

Um ein Entweichen von heißer Luft aus dem Trocknerinnenraum zu verhindern, ist es günstig, wenn das Wandelement im wesentlichen gasdicht mit einem der Bodenelemente des Trocknerbodens verbunden, vorzugsweise verschweißt, ist.

Das Wandelement kann ferner mit einer Wärmeisolierung versehen sein.

Die Getriebeeinheit der Antriebsvorrichtung kann insbesondere als eine Winkelgetriebeeinheit ausgebildet sein, um die Übertragungsrichtung des Drehantriebs umlenken zu können.

Um zu verhindern, dass Heißluft aus dem Trocknerinnenraum längs einer Welle der Antriebsvorrichtung nach außen entweichen kann, weist die Antriebsvorrichtung vorzugsweise mindestens eine Wellendichtung zum im wesentlichen gasdichten Abdichten einer durch ein Wandelement des Trocknergehäuses hindurchtretenden Welle auf.

Alternativ zur Erzeugung der Translationsbewegung der Werkstücke durch den Trocknertunnel mittels einer Antriebsvorrichtung für die Tragrolleneinheiten kann auch vorgesehen sein, dass die Fördervorrichtung mindestens ein Zugmittel umfasst, an welches die Werkstückträger ankoppelbar sind.

In diesem Fall kann auf einen Antrieb der Tragrollen im Trocknerboden verzichtet werden; die im Trocknerboden integrierten Tragrollen haben dann lediglich die Funktion, die Werkstückträger mit den daran angeordneten Werkstücken zu tragen und seitlich zu führen, nicht aber, die Translationsbewegung der Werkstückträger anzutreiben.

Das verwendete Zugmittel umfasst vorteilhafterweise mindestens einen Mitnehmer, der in einer Koppelstellung an jeweils einem Werkstückträger angreift.

Um den Zugmittelrücklauf in unmittelbarer Nähe der Werkstückträgerbahn anordnen zu können, ist es von Vorteil, wenn der Mitnehmer von der Koppelstellung in eine Ruhestellung bringbar ist, in welcher er nicht an den Werkstückträgern angreift.

Das verwendete Zugmittel kann insbesondere als eine Kette oder als ein Seil ausgebildet sein.

Besonders platzsparend ist eine Fördervorrichtung, bei welcher der Zugmittelvorlauf und/oder der Zugmittelrücklauf - in der Draufsicht von oben gesehen - zwischen den seitlichen Rändern der Werkstückträger, insbesondere zwischen den Kufen von Skidrahmen, verläuft.

Wenn die Tragrollen der Fördervorrichtung in zwei im wesentlichen parallel zur Förderrichtung verlaufenden Tragrollenreihen angeordnet sind, ist es für eine platzsparende Anordnung der Fördervorrichtung von Vorteil, wenn der Zugmittelvorlauf und/oder der Zugmittelrücklauf - in der Draufsicht von oben gesehen - zwischen den beiden Tragrollenreihen verläuft.

Besonders günstig ist es, wenn die Fördervorrichtung des Trockners so ausgebildet ist, dass die Fördergeschwindigkeit der Werkstücke längs der Förderrichtung variabel ist. Hierdurch können die Abstände zwischen den längs der Förderrichtung aufeinanderfolgenden Werkstücken beliebig variiert werden und beispielsweise Lücken zwischen aufeinanderfolgenden Werkstücken bewusst erzeugt werden.

Eine variable Fördergeschwindigkeit der Werkstücke lässt sich beispielsweise in einfacher Weise dadurch erzeugen, dass die Antriebsvorrichtungen von in der Förderrichtung aufeinanderfolgenden Tragrolleneinheiten mit unterschiedlichen Drehzahlen betrieben werden.

Der Trockner kann mehrere in der Förderrichtung aufeinanderfolgende Abschnitte umfassen, wobei die Fördergeschwindigkeit der Werkstücke längs der Förderrichtung von Abschnitt zu Abschnitt variiert.

Insbesondere kann der Trockner aus in der Förderrichtung aufeinanderfolgenden Trocknermodulen zusammengesetzt sein, wobei die Fördergeschwindigkeit der Werkstücke von Modul zu Modul variiert.

Alternativ hierzu ist es jedoch auch möglich, in ein und demselben Trocknermodul mehrere Antriebsvorrichtungen mit unterschiedlichen Fördergeschwindigkeiten vorzusehen.

Um zu verhindern, dass aufgrund des Schlupfes zwischen den Tragrollen und den Werkstückträgern Werkstückträger in dem Trockner aufeinanderfahren, ist es günstig, wenn die Fördergeschwindigkeit der Werkstücke in dem Trocknertunnel längs der Förderrichtung im Mittel zunimmt.

Um die Werkstücke möglichst rasch in den Trockner einbringen zu können, insbesondere innerhalb eines von einer dem Trockner vorgeschalteten Fördervorrichtung vorgegebenen Fördertaktes, ist es günstig, wenn der Trockner in seinem Eingangsbereich mit einer Schnellabzugsrollenbahn versehen ist, welche mit einer deutlich höheren Fördergeschwindigkeit als die Fördervorrichtung, welche die Werkstücke vom Eingangsbereich des Trockners zu dessen Ausgangsbereich fördert, betrieben wird.

Entsprechend ist es günstig, wenn der Ausgangsbereich des Trockners mit einer Schnellabzugsrollenbahn versehen ist, damit die getrockneten Werkstücke aus dem Trockner sehr rasch, beispielsweise innerhalb eines von einer dem Trockner nachgeschalteten Fördervorrichtung vorgegebenen Fördertaktes, aus dem Trockner abgegeben werden können.

Der vorliegenden Erfindung liegt die weitere Aufgabe zugrunde, ein Verfahren zur Montage eines Trockners zum Trocknen von oberflächenbehandelten Werkstücken, insbesondere Fahrzeugkarosserien, die auf jeweils einem Werkstückträger angeordnet sind, zu schaffen, welches rasch und einfach durchführbar ist.

Diese Aufgabe wird durch ein Verfahren gelöst, das die folgenden Verfahrensschritte umfasst:
- Montieren von mehreren in einer Förderrichtung aufeinanderfolgenden Tragrolleneinheiten, welche jeweils mindestens eine Tragrolle aufweisen, auf welcher die Werkstückträger beim Transport durch einen Trocknertunnel des Trockners aufliegen, an jeweils einem Bodenelement eines Trocknerbodens des Trockners;
- anschließendes Herstellen des Trockners unter Verwendung der aus den Bodenelementen und den daran angeordneten Tragrolleneinheiten gebildeten vormontierten Einheiten.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen Querschnitt durch einen Trockner mit einem Trocknertunnel, durch welchen auf Skidrahmen angeordnete Fahrzeugkarosserien hindurchbewegt werden mittels angetriebener Tragrollen, die an Hutprofilen des Trocknerbodens festgelegt sind;
- Fig. 2: eine vergrößerte Darstellung des Bereichs I aus Fig. 1;
- Fig. 3: eine vergrößerte Darstellung des Bereichs II aus Fig. 2;
- Fig. 4: eine schematische, teilweise geschnittene Seitenansicht eines Abschnitts eines Trocknermoduls mit vier Paaren von Tragrollen;
- Fig. 5: eine vergrößerte Darstellung des Bereichs III aus Fig. 4;
- Fig. 6: eine schematische Draufsicht auf eine in den Trocknerboden eines Trocknermoduls integrierte Fördervorrichtung mit 12 Paaren angetriebener Tragrollen;
- Fig. 7: einen schematischen Querschnitt durch eine zweite Ausführungsform eines Trockners mit einem Trocknertunnel, durch welchen auf Skidrahmen angeordnete Fahrzeugkarosserien hindurchgefördert werden, und mit einer Fördervorrichtung, welche Paare von Tragrollen umfasst, von denen jeweils nur eine Tragrolle angetrieben ist;
- Fig. 8: eine vergrößerte Darstellung des Bereichs IV aus Fig. 7;
- Fig. 9: einen schematischen Querschnitt durch eine dritte Ausführungsform eines Trockners mit einem Trocknertunnel, durch welchen auf Skidrahmen angeordnete Fahrzeugkarosserien hindurchgefördert werden, und mit einer Fördervorrichtung, welche nicht angetriebene Tragrollen und eine Kette umfasst, die mittels Mitnehmern an den Skidrahmen angreift;
- Fig. 10: eine vergrößerte Darstellung des Bereichs V aus Fig. 9;
- Fig. 11: einen schematischen Querschnitt durch eine vierte Ausführungsform eines Trockners mit einem Trocknertunnel, durch welchen auf Skidrahmen angeordnete Fahrzeugkarosserien hindurchgefördert werden, und mit einer Fördervorrichtung, welche nicht angetriebene Tragrollen und ein Seil umfasst, das mittels Mitnehmern an den Skidrahmen angreift;
- Fig. 12: eine vergrößerte Darstellung des Bereichs VI aus Fig. 11;
- Fig. 13: einen schematischen Querschnitt durch eine fünfte Ausführungsform eines Trockners mit einem Trocknertunnel, durch welchen auf Skidrahmen angeordnete Fahrzeugkarosserien hindurchgefördert werden, und mit einer Fördervorrichtung, welche Tragrolleneinheiten mit jeweils zwei koaxial zueinander angeordneten Tragrollen umfasst, welche auf einer gemeinsamen Tragrollenwelle gehalten sind;
- Fig. 14: eine vergrößerte Darstellung des Bereichs VII aus Fig. 13; und
- Fig. 15: eine vergrößerte Darstellung des Bereichs VIII aus Fig. 14.

Gleiche oder funktional äquivalente Elemente sind in allen Figuren mit denselben Bezugszeichen bezeichnet.

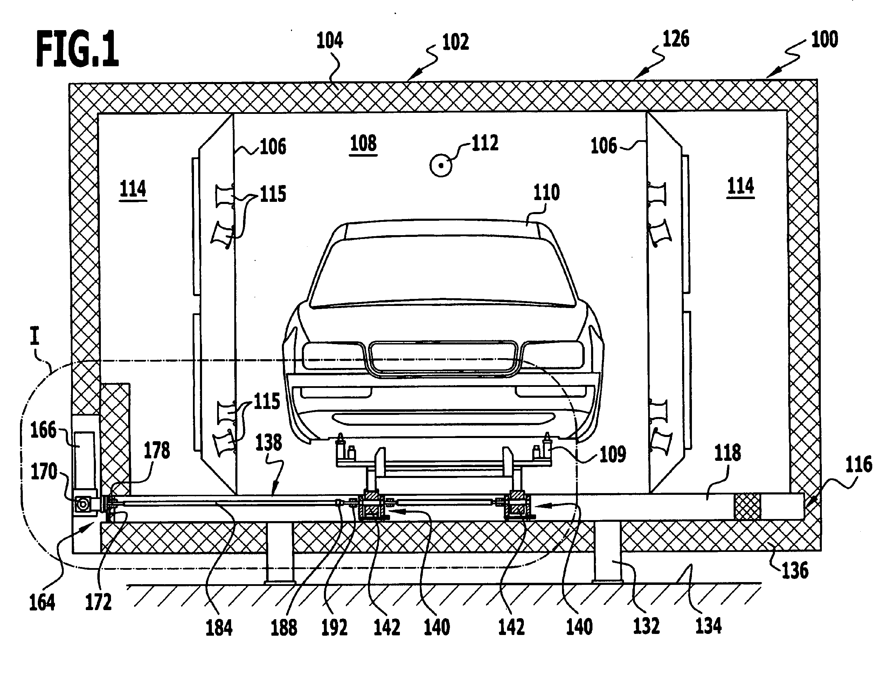

Ein in den Fig. 1 bis 6 dargestellter, als Ganzes mit 100 bezeichneter Trockner umfasst ein im wesentlichen quaderförmiges Trocknergehäuse 102, das mit einer Wärmeisolierung 104 versehen ist.

Der Innenraum des Trocknergehäuses 102 ist mittels vertikaler Zwischenwände 106 in einen Trocknertunnel 108, durch welchen auf jeweils einem als Werkstückträger dienenden Skidrahmen 109 angeordnete Fahrzeugkarosserien 110 längs einer parallel zur Längsrichtung des Trockners 100 verlaufenden Förderrichtung 112 hindurchgefördert werden, und zwei zu beiden Seiten des Trocknertunnels 108 angeordnete Heißluft-Zuführräume 114 unterteilt.

Die Zwischenwände 106 sind mit Heißluft-Zuführdüsen 115 versehen, durch welche Heißluft aus den Heißluft-Zuführräumen 114 in den Trocknertunnel 108 zu den Fahrzeugkarosserien 110 gelangt.

Der als Ganzes mit 116 bezeichnete Trocknerboden umfasst als tragende Elemente Bodenelemente 118, welche als Hutprofile ausgebildet sind, die sich horizontal und im wesentlichen senkrecht zur Förderrichtung 112 erstrecken.

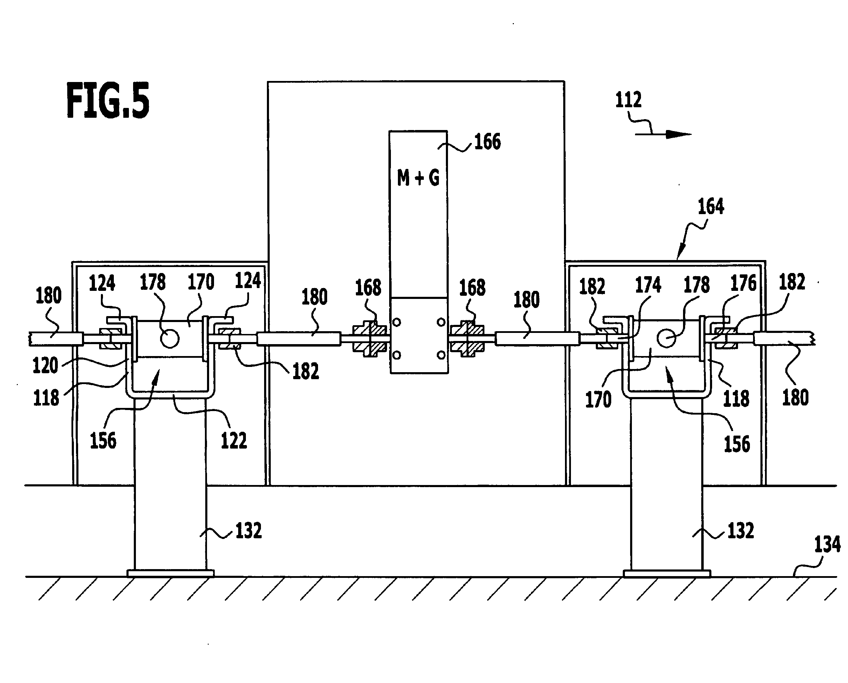

Wie am besten aus Fig. 5 zu erkennen ist, weist jedes der Bodenelemente 118 einen im Querschnitt U-förmigen Mittelteil mit zwei vertikalen Schenkeln 120 und einem die unteren Ränder der vertikalen Schenkel 120 miteinander verbindenden horizontalen Steg 122 auf sowie zwei horizontale Flansche 124, welche sich von den oberen Rändern der vertikalen Schenkel 120 in einander entgegengesetzte Richtungen erstrecken.

Diese im Querschnitt hutförmigen Bodenelemente 118 folgen längs der Förderrichtung 112 in einem Abstand d aufeinander, welcher beispielsweise ungefähr 1 m beträgt.

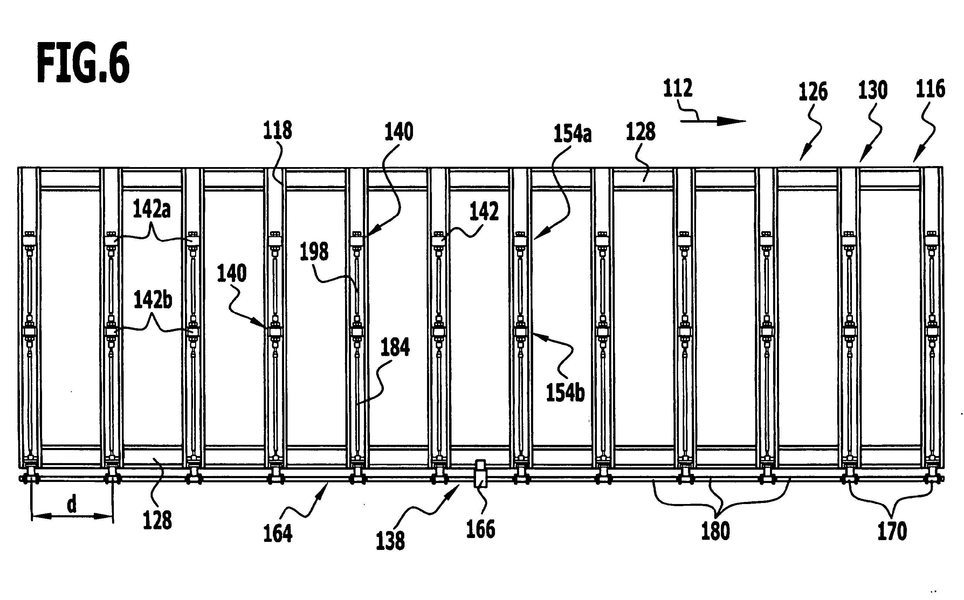

Der Trockner 100 ist modular aufgebaut und umfasst mehrere, längs der Förderrichtung 112 aufeinanderfolgende Trocknermodule 126, mit einer vorgegebenen Modullänge von beispielsweise ungefähr 12 m und somit einer vorgegebenen Anzahl von beispielsweise 12 Bodenelementen, wobei der Abstand zwischen dem Anfang bzw. dem Ende eines Trocknermoduls 126 einerseits und dem jeweils nächstbenachbarten Bodenelement 118 beispielsweise ungefähr 0,5 m beträgt (siehe Fig. 6).

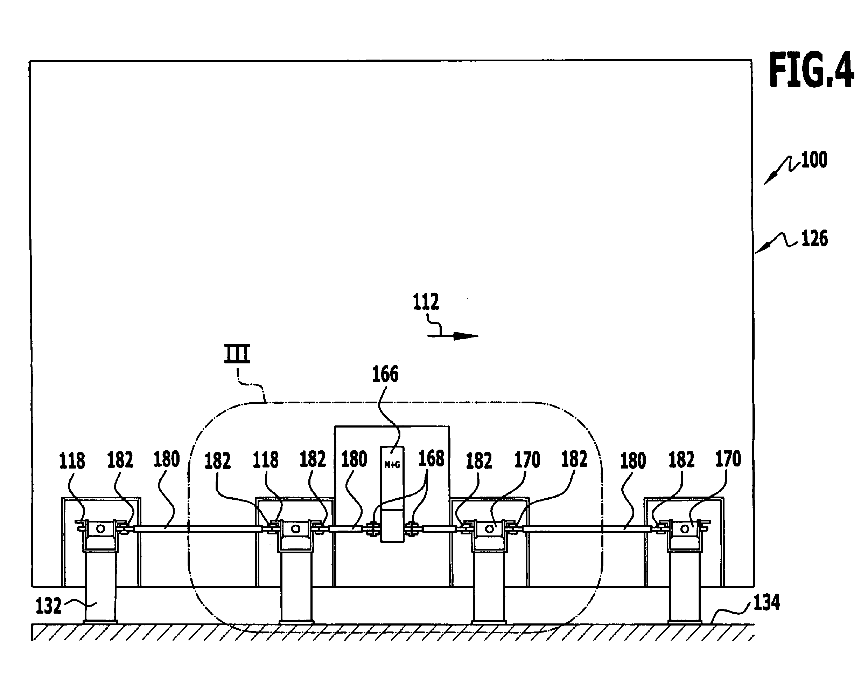

Das in Fig. 4 dargestellte Trocknermodul weist sechs Bodenelemente 118 auf.

Jedes der Trocknermodule 126 wird beim Hersteller als Einheit gefertigt, als Einheit zum Aufstellungsort des Trockners 100 transportiert und dort mit weiteren Trocknermodulen 126 zusammengefügt, bis die gewünschte Gesamtlänge des Trockners 100 erreicht ist.

Zur Versteifung des Trocknerbodens 116 sind die Bodenelemente 118 eines Trocknermoduls 126 mit den jeweils benachbarten Bodenelementen 118 über jeweils zwei Versteifungselemente 128 verbunden, welche sich jeweils zwischen den linken Enden und zwischen den rechten Enden der Bodenelemente 118 im wesentlichen parallel zur Förderrichtung 112 erstrecken.

Diese Versteifungselemente 128 können ebenfalls als Hutprofile ausgebildet sein.

Die Bodenelemente 118 und die Versteifungselemente 128 bilden somit zusammen einen tragenden Bodenrahmen 130 des Trocknerbodens 116.

An die Unterseite der Stege 122 der Bodenelemente 118 sind jeweils mehrere Füße 132 angeschweißt, mit denen sich der Bodenrahmen 130 an einem Untergrund 134 abstützt (siehe Fig. 4).

Wie beispielsweise aus Fig. 1 zu ersehen ist, ist ferner an der Unterseite der Bodenelemente 118 und der Versteifungselemente 128 eine Wärmeisolierung 136 angebracht, welche sich auch über die zwischen den Bodenelementen 118 und den Versteifungselementen 128 verbleibenden Zwischenräume des Trocknerbodens 116 erstreckt.

Für den Transport der auf den Skidrahmen 109 angeordneten Fahrzeugkarosserien 110 durch den Trocknertunnel 108 umfasst jedes Trocknermodul 126 ferner eine Fördervorrichtung 138, welche ihrerseits eine Mehrzahl längs der Förderrichtung 112 aufeinanderfolgender Tragrolleneinheiten 140 umfasst, die in den Bodenrahmen 130 integriert sind.

Jede der Tragrolleneinheiten 140 umfasst jeweils eine im wesentlichen zylindrische Tragrolle 142, die drehfest an einer Tragrollenwelle 144 angeordnet ist, und einen Rollenbock 146, an dessen beiden Schenkeln 148 die Tragrollenwelle 144 mittels Kugellagern 150 um eine horizontale, senkrecht zur Förderrichtung 112 verlaufende Drehachse 152 drehbar gelagert ist.

Die beiden Schenkel 148 jedes Rollenbocks 146 erstrecken sich von einer gemeinsamen horizontalen Grundplatte 153 aus nach oben.

Jeweils zwei dieser Tragrolleneinheiten 140 sind an jedem der Bodenelemente 118 unabhängig voneinander lösbar festgelegt, und zwar so, dass die Tragrollen 142 der beiden Tragrolleneinheiten 140 koaxial zueinander ausgerichtet und senkrecht zur Förderrichtung 112 voneinander beabstandet sind.

Wie aus Fig. 6 zu ersehen ist, sind die jeweils (in der Förderrichtung 112 gesehen) links an den Bodenelementen 118 festgelegten Tragrollen 142a längs der Förderrichtung 112 miteinander fluchtend angeordnet, so dass diese linken Tragrollen 142a eine linke Tragrollenreihe 154a bilden.

Entsprechend sind die an den Bodenelementen 118 jeweils (in der Förderrichtung 112 gesehen) rechts angeordneten Tragrollen 142b ebenfalls in der Förderrichtung 112 miteinander fluchtend angeordnet, so dass diese rechten Tragrollen 142b zusammen eine rechte Tragrollenreihe 154b bilden.

Die Tragrolleneinheiten 140 sind vorzugsweise lösbar an den Bodenelementen 118 festgelegt, beispielsweise dadurch, dass ihre Rollenböcke 146 an die Stege 122 der Bodenelemente 118 angeschraubt sind.

Die Verschraubung der Rollenböcke 146 an den Bodenelementen 118 erfolgt so, dass ein Ausbau und ein Ausrichten der Tragrollen 142 ohne großen Aufwand möglich ist.

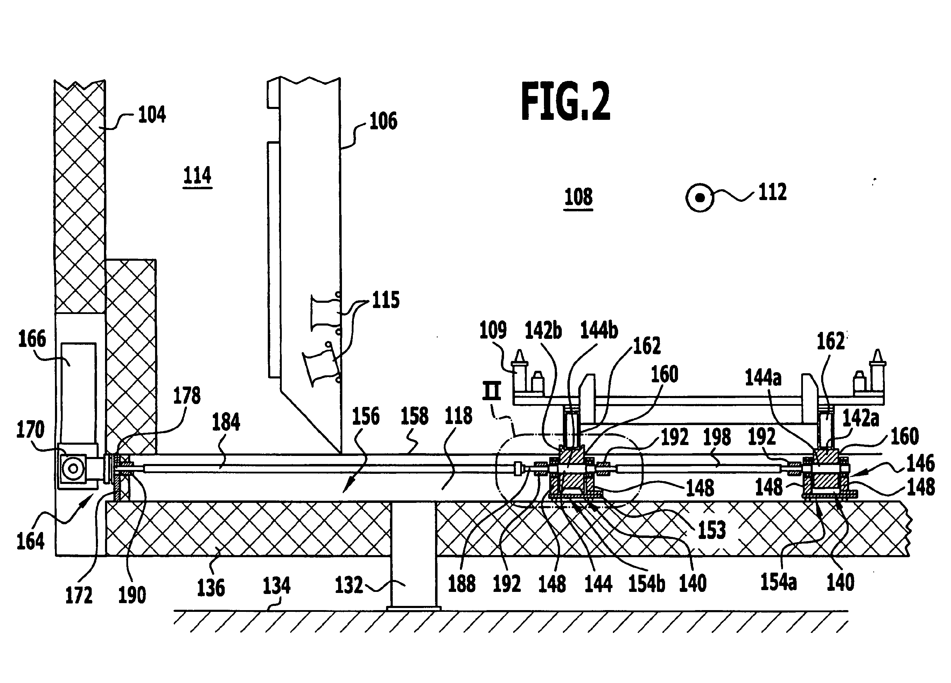

Wie am besten aus Fig. 2 zu ersehen ist, bildet der von den vertikalen Schenkeln 120 und dem Steg 122 jedes Bodenelements 118 begrenzte Innenraum 156 des betreffenden Bodenelements 118 jeweils eine Aufnahme für die beiden an dem Bodenelement 118 angeordneten Tragrolleneinheiten 140, welche die Rollenböcke 146 dieser Tragrolleneinheiten 140 vollständig aufnimmt.

Dieser Innenraum 156 jedes Bodenelements 118 ist durch jeweils ein Abdeckblech 158 nach oben, d.h. zu dem Trocknertunnel 108 bzw. zu den Heißluft-Zuführräumen 114 hin, abgedeckt.

Diese Abdeckbleche 158 sind jeweils an den horizontalen Flanschen 124 des jeweiligen Bodenelements 118 lösbar festgelegt, insbesondere angeschraubt.

Vorzugsweise erstreckt sich jedes dieser Abdeckbleche 158 über im wesentlichen die gesamte Länge des jeweiligen Bodenelements 118, um durch Abnehmen des Abdeckblechs 158 den gesamten Innenraum 156 des Bodenelements 118 für Wartungs- oder Reinigungszwecke zugänglich zu machen.

Jedes der Abdeckbleche 158 weist im Bereich der Tragrolleneinheiten 140 jeweils eine im wesentlichen rechteckige Durchtrittsöffnung 160 für jeweils eine Tragrolle 142 auf, durch welche sich die jeweils zugeordnete Tragrolle 142 hindurch erstreckt, so dass die Kuppe der Tragrolle 142, auf welcher die zu transportierenden Skidrahmen 109 mit jeweils einer ihrer Kufen 162 aufliegen, oberhalb des Abdeckblechs 158 angeordnet ist.

Um die Skidrahmen 109 mit den darauf angeordneten Fahrzeugkarosserien 110 durch den Trocknertunnel 108 bewegen zu können, sind bei der in den Fig. 1 bis 6 dargestellten Ausführungsform des Trockners 100 alle Tragrollen 142 eines Trocknermoduls 126 mittels einer als Ganzes mit 164 bezeichneten Antriebsvorrichtung zu einer Drehbewegung um ihre Drehachsen 152 antreibbar.

Wie am besten aus den Fig. 4 bis 6 zu ersehen ist, umfasst die Antriebsvorrichtung 164 des Trocknermoduls 126 einen Antriebsmotor 166, welcher an der Außenseite des Trocknergehäuses 102, also außerhalb der Wärmeisolierung 104, ungefähr mittig an einer Längsseite des Trocknermoduls 126 angeordnet ist.

Der Antriebsmotor 166 ist als ein Getriebemotor ausgebildet und weist zwei Abtriebswellen 168 auf, welche in einander entgegengesetzte, zur Förderrichtung 112 parallele Richtungen weisen.

Jedem Bodenelement 118 ist jeweils eine Getriebeeinheit 170 zugeordnet, die auf eine vertikale Abschlussplatte 172 aufgeschraubt ist, welche an einem der Enden (beispielsweise am, in der Förderrichtung 112 gesehen, rechten Ende) des Bodenelements 118 gasdicht in das Bodenelement 118 eingeschweißt ist, so dass es den Innenraum 156 des Bodenelements 118 zur Außenseite des Trockners 100 hin gasdicht verschließt und somit keine Heißluft aus dem Trockner 100 nach außen gelangen kann.

Auf der der Innenseite des Trockners 100 zugewandten Innenseite der Abschlussplatte 172 ist eine Wärmeisolierung angeordnet.

Die Getriebeeinheiten 170 sind als Winkelgetriebe, insbesondere als Kegelradgetriebe, ausgebildet und weisen jeweils eine antriebsseitige Eingangswelle 174, eine erste, parallel zur Eingangswelle 174 ausgerichtete Ausgangswelle 176 und eine zweite, sich in horizontaler Richtung und senkrecht zur Eingangswelle 174 in den Innenraum des Trockners 100 hinein erstreckende zweite Ausgangswelle 178 auf.

Die Eingangswelle 174 jeder Getriebeeinheit 170 ist über jeweils eine sich im wesentlichen horizontal und parallel zur Förderrichtung 112 erstreckende Längsverbindungswelle 180 entweder mit einer der Abtriebswellen 168 des Antriebsmotors 166 oder mit der ersten Ausgangswelle 176 einer näher an dem Antriebsmotor 166 positionierten anderen Getriebeeinheit 170 verbunden.

Die Längsverbindungswellen 180 sind dabei an ihrem einen Ende mittels jeweils einer Kupplung 182 drehfest mit einer der Abtriebswellen 168 des Antriebsmotors 166 oder mit einer Ausgangswelle 176 einer Getriebeeinheit 170 und an ihrem anderen Ende ebenfalls mittels einer Kupplung 182 mit der Eingangswelle 174 einer Getriebeeinheit 170 verbunden.

Die Kupplungen 182 können flexibel, insbesondere biegsam, ausgebildet sein, um einen eventuell auftretenden Versatz und/oder eine Abweichung in der Ausrichtung der durch die Längsverbindungswelle 180 miteinander zu verbindenden Wellen ausgleichen zu können.

Die Längsverbindungswellen 180 können insbesondere aus Rohren bestehen, an deren Enden Wellenprofile festgelegt, insbesondere eingeschweißt, sind.

Die erste Ausgangswelle 176 jeder Getriebeeinheit 170 ist über jeweils eine Längsverbindungswelle 180 mit der Eingangswelle 174 einer weiter vom Antriebsmotor 166 entfernten Getriebeeinheit 170 verbunden. Lediglich die ganz am Anfang bzw. ganz am Ende eines Trocknermoduls 126 angeordneten Getriebeeinheiten 170, auf welche keine weitere Getriebeeinheit 170 mehr folgt, sind an ihren ersten Ausgangswellen 176 mit keiner weiteren Längsverbindungswelle 180 verbunden.

Die zweite Ausgangswelle 178 jeder Getriebeeinheit 170, welche sich senkrecht zur Förderrichtung 112 in den Innenraum 156 jeweils eines Bodenelements 118 hinein erstreckt, ist zur Außenseite des Trockners 100 hin durch eine (nicht dargestellte) Wellendichtung, die sich innerhalb des Gehäuses der Getriebeeinheit 170 befindet, im wesentlich gasdicht abgedichtet, so dass keine Heißluft aus dem Innenraum des Trockners 100 längs dieser Ausgangswelle 178 nach außen gelangen kann.

Jede dieser zweiten Ausgangswellen 178 ist über jeweils eine sich im wesentlichen senkrecht zur Förderrichtung 112 durch den Innenraum 156 eines Bodenelements 118 hindurch erstreckende Querverbindungswelle 184 mit der Tragrollenwelle 144 der jeweils näherliegenden Tragrolle 142b verbunden.

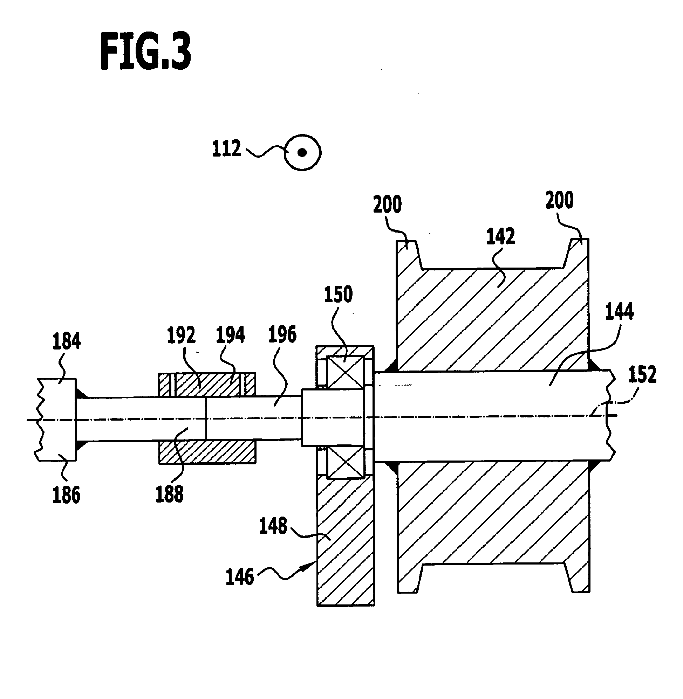

Auch die Querverbindungswellen 184 bestehen aus jeweils einem Rohr 186, an dessen Enden jeweils ein Wellenprofil 188 festgelegt, insbesondere eingeschweißt, ist (siehe insbesondere Fig. 3).

Jede Querverbindungswelle 184 ist an ihrem einen Ende über eine Kupplung 190 mit der zweiten Ausgangswelle 178 einer Getriebeeinheit 170 und an dem gegenüberliegenden Ende über eine Kupplung 192 mit der Tragrollenwelle 144 der Tragrolle 142b verbunden.

Die beiden Kupplungen 190 und 192 können flexibel, insbesondere biegsam, ausgebildet sein, damit sie sich in dem Fall, dass die Querverbindungswelle 184 nicht genau mit der zweiten Ausgangswelle 178 der Getriebeeinheit 170 bzw. mit der Tragrollenwelle 144 der Tragrolle 142b fluchtet, an die Lage und Ausrichtung dieser Wellen anpassen kann.

Wie aus Fig. 3 zu ersehen ist, kann die Kupplung 192 insbesondere eine hohlzylindrische Hülse 194 umfassen, welche das tragrollenseitige Wellenprofil 188 der Querverbindungswelle 184 und ein verbindungswellenseitiges Wellenprofil 196, das am Ende der Tragrollenwelle 144 ausgebildet ist, aufnimmt.

Um auch die weiter von der Getriebeeinheit 170 entfernte Tragrolle 142a, die an demselben Bodenelement 118 angeordnet ist, zu einer Drehbewegung antreiben zu können, ist die Tragrollenwelle 144b der näher an der Getriebeeinheit 170 angeordneten Tragrolle 142b über eine weitere Querverbindungswelle 198 mit der Tragrollenwelle 144a der weiter von der Getriebeeinheit 170 entfernten Tragrolle 142a verbunden.

Die Querverbindungswelle 198 erstreckt sich im wesentlichen senkrecht zur Förderrichtung 112 durch den Innenraum 156 des Bodenelements 118 hindurch und ist durch Kupplungen 192 an ihren beiden Enden mit den Tragrollenwellen 144a bzw. 144b drehfest verbunden.

Um einen Versatz und/oder eine Abweichung in der Ausrichtung der Tragrollenwellen 144a, 144b ausgleichen zu können, sind die Kupplungen 192 vorzugsweise flexibel, insbesondere biegsam, ausgebildet.

Die Kupplungen 192 können insbesondere, wie die Kupplung 192 zwischen der Querverbindungswelle 184 und der Tragrollenwellen 144b, eine hohlzylindrische Hülse 194 umfassen, welche die Wellenprofile der miteinander zu verbindenden Wellen aufnimmt.

Die Kupplungen 192 sind lösbar an den Wellenprofilen 196 der Tragrollenwellen 144 festgelegt, insbesondere daran angeschraubt, so dass sie von den Tragrollenwellen 144 abgenommen werden können. Nach Lösen der Kupplungen 192 von den Tragrollenwellen 144 können die Tragrollenwellen 144 längs ihrer Drehachse 152 relativ zum jeweils zugeordneten Rollenbock 146 verschoben und anschließend nach oben in Richtung des Trocknertunnels 108 aus dem Rollenbock 146 entnommen werden, nachdem zuvor das Abdeckblech 158 von dem Bodenelement 118 abgenommen worden ist, um den Innenraum 156 des Bodenelements 118 vom Trocknertunnel 108 aus zugänglich zu machen.

Auf diese Weise ist es möglich, die Tragrollenwellen 144 zu demontieren, um beispielsweise einen Rollenbock 146, ein Kugellager 150 eines Rollenbocks 146 oder eine Tragrolle 142 austauschen zu können.

Bei einer Variante der vorstehend beschriebenen Ausführungsform kann auch vorgesehen sein, dass die beiden am selben Bodenelement 118 angeordneten Tragrollen 142a, 142b nicht über eine dazwischen angeordnete Querverbindungswelle 198 verbunden sind, sondern statt dessen auf einer gemeinsamen Tragrollenwelle 144 angeordnet sind, welche sich von der einen Tragrolle 142a bis zu der anderen Tragrolle 142b durch den Innenraum 156 des Bodenelements 118 hindurch erstreckt.

Mit der vorstehend beschriebenen Antriebsvorrichtung 164 ist es möglich, mittels des frequenzgesteuerten Antriebsmotors 166 sämtliche Tragrollen 142 mit derselben Drehzahl um ihre Drehachsen 152 drehen zu lassen, so dass die auf den Tragrollen 142 aufliegenden Skidrahmen 109 und die daran angeordneten Fahrzeugkarosserien 110 aufgrund der Reibung zwischen den Kufen 162 der Skidrahmen 109 und den Umfangsflächen der Tragrollen 142 längs der Förderrichtung 112 bewegt werden.

Um die Skidrahmen 109 bei dieser Bewegung seitlich zu führen, können die jeweils rechts angeordneten Tragrollen 142b und/oder die jeweils links angeordneten Tragrollen 142a mit einem oder mit mehreren Spurkränzen 200 versehen sein (siehe Fig. 3).

Besteht ein Schlupf zwischen den Skidrahmen 109 und den Tragrollen 142, so kann dieser Schlupf durch unterschiedliche Motordrehzahlen des Antriebsmotors 166 ausgeglichen werden.

Um zu verhindern, dass Skidrahmen 109 wegen unterschiedlichen Schlupfes aufeinanderfahren, kann vorgesehen sein, dass die Drehzahl der Antriebsmotoren 166 in der Förderrichtung 112 aufeinanderfolgender Trocknermodule 126 in der Förderrichtung 112 allmählich ansteigt, wodurch sich auch die Fördergeschwindigkeit der Skidrahmen 109 in der Förderrichtung 112 allmählich erhöht, so dass die Fahrzeugkarosserien 110 beim Durchlaufen des Trocknertunnels 108 auseinandergezogen werden und somit nicht gegeneinander fahren können.

Eines, mehrere oder alle Trocknermodule 126 des Trockners 100 können statt mit einer einzigen Antriebsvorrichtung 164 auch mit mehreren Antriebsvorrichtungen 164 versehen sein, die jeweils einen Antriebsmotor 166 aufweisen, so dass auch innerhalb desselben Trocknermoduls 126 die Fördergeschwindigkeit der Skidrahmen 109 variiert werden kann, indem die Antriebsmotoren 166 der in der Förderrichtung 112 aufeinanderfolgenden Antriebsvorrichtungen 164 des betreffenden Trocknermoduls 126 mit unterschiedlichen Drehzahlen betrieben werden.

Umgekehrt ist es auch denkbar, dass mehrere in der Förderrichtung 112 aufeinanderfolgende Trocknermodule 126 eine gemeinsame Antriebsvorrichtung 164 mit nur einem Antriebsmotor 166 aufweisen, so dass dieser Antriebsmotor 166 dann die Tragrollen 142 mehrerer Trocknermodule 126 antreibt.

Die im Eingangsbereich und/oder die im Ausgangsbereich des Trockners 100 angeordneten Tragrolleneinheiten 140 können jeweils eine Schnellabzugsrollenbahn bilden, welche mit einer besonders hohen Fördergeschwindigkeit von beispielsweise ungefähr 30 m/min betrieben werden, um die Fahrzeugkarosserien 110 sehr rasch, insbesondere innerhalb einer vorgegebenen Taktzeit, in den Trockner 100 hineinzufördern bzw. aus dem Trockner 100 herauszufördern und an eine nachfolgende Fördervorrichtung zu übergeben.

Insbesondere ist es somit möglich, bei einem Trockner 100, der auf einem anderen Höhenniveau angeordnet ist als eine dem Trockner 100 vorgeschaltete Fördervorrichtung, mittels einer Hebevorrichtung innerhalb eines Fördertaktes jeweils eine Fahrzeugkarosserie 110 nach oben oder nach unten auf das Niveau des Trockners 100 zu fahren, die Fahrzeugkarosserie 110 mittels der Schnellabzugsrollenbahn in den Trocknertunnel 108 einzufahren und die Hebevorrichtung zur Aufnahme der nächsten Fahrzeugkarosserie 110 leer wieder nach unten bzw. wieder nach oben zu fahren.

Entsprechend ist es möglich, bei einem Trockner 100, der auf einem anderen Höhenniveau angeordnet ist als eine dem Trockner nachgeschaltete Fördervorrichtung, jeweils eine Fahrzeugkarosserie 110 innerhalb eines Fördertaktes der nachfolgenden Fördervorrichtung mittels der Schnellabzugsrollenbahn im Endbereich des Trockners 100 aus dem Trocknertunnel 108 auf die Hebevorrichtung zu fahren, die Fahrzeugkarosserie 110 mit der Hebevorrichtung nach unten oder nach oben zu bewegen, die Fahrzeugkarosserie 110 auf dem anderen Höhenniveau an die nachgeschaltete Fördervorrichtung zu übergeben und die Hebevorrichtung zur Aufnahme der nächsten Fahrzeugkarosserie 110 leer wieder nach oben bzw. nach unten zu fahren.

Zwischen den Schnellabzugsrollenbahnen im Eingangsbereich und im Ausgangsbereich des Trockners 100 werden die Fahrzeugkarosserien 110 mit der normalen Fördergeschwindigkeit von beispielsweise ungefähr 3 m/min gefördert.

Die Schnellabzugsrollenbahnen im Eingangsbereich und im Ausgangsbereich des Trockners 100 sind ebenso aufgebaut wie die vorstehend beschriebene Fördervorrichtung 138.

Ein Trocknermodul 126 für den Eingangsbereich oder für den Ausgangsbereich des Trockners 100 kann insbesondere mit zwei Antriebsvorrichtungen 164 mit jeweils einem Antriebsmotor 166 ausgerüstet werden, wobei die eine Antriebsvorrichtung 164 die Tragrollen 142 der jeweiligen Schnellabzugsrollenbahn mit der Drehzahl für eine höhere Antriebsgeschwindigkeit antreibt, während die andere Antriebsvorrichtung 164 die sich an die Schnellabzugsrollenbahn anschließenden Tragrollen 142 mit der Drehzahl für die normale Fördergeschwindigkeit antreibt.

Dadurch, dass bei dem Trockner 100 mehrere voneinander unabhängig arbeitende Antriebsvorrichtungen 164 in der Förderrichtung 112 aufeinanderfolgen, kann die Fördergeschwindigkeit im Trockner 100 in einfacher Weise variiert werden. Es ist auch möglich, die Fahrzeugkarosserien 110 vollständig anzuhalten oder zeitweise entgegen der Förderrichtung 112 zu bewegen.

Wenn der Trockner 100 beispielsweise einen Umlufttrocknerabschnitt und einen UV-Strahlungs-Trocknungsabschnitt umfasst, welche in der Förderrichtung 112 aufeinanderfolgen, so können die Fahrzeugkarosserien 110 beispielsweise durch den Umlufttrocknerabschnitt mit der normalen Fördergeschwindigkeit von beispielsweise ungefähr 3 m/min gefördert werden, anschließend im UV-Strahlungs-Trocknungsabschnitt für die Bestrahlung mit UV-Licht während einer geforderten Verweilzeit angehalten werden und anschließend mit einer erhöhten Fördergeschwindigkeit weitertransportiert werden, um im Mittel wiederum die normale Fördergeschwindigkeit zu erreichen.

Es ist auch möglich, zwischen zwei in der Förderrichtung 112 aufeinanderfolgenden Fahrzeugkarosserien 110 durch geeignete Ansteuerung der Antriebsvorrichtungen 164 eine Lücke zu erzeugen, so dass eine UV-Bestrahlungsvorrichtung zwischen die beiden Fahrzeugkarosserien 110 eingebracht werden kann, um das Heck der vorderen Fahrzeugkarosserie 110 und den Bug der hinteren Fahrzeugkarosserie 110 bestrahlen zu können.

Bei der Herstellung des vorstehend beschriebenen Trockners 100 wird zunächst der Bodenrahmen 130 des Trocknerbodens 116 eines Trocknermoduls 126 hergestellt. Anschließend werden die Tragrolleneinheiten 140 einzeln an den Bodenelementen 118 des Bodenrahmens 130 festgelegt, und die Antriebsvorrichtung 164, welche jeweils ein Antriebsmodul 166 sowie Getriebeeinheiten 170, Längsverbindungswellen 180 und Querverbindungswellen 184, 198 umfasst, wird an dem Bodenrahmen 130 montiert.

Nach Abschluss dieses Montageschrittes bilden der Bodenrahmen 130 und die aus den Tragrolleneinheiten 140 und der Antriebsvorrichtung 164 gebildete Fördervorrichtung 138 eine mechanisch und elektrisch vormontierte, als Ganzes handhabbare Einheit.

Diese vormontierte Einheit kann als Ganzes an den Ort, an welchem der Trockner 100 installiert werden soll, gebracht werden und dort mit den übrigen Bestandteilen des Trockners 100 vereinigt werden.

Alternativ hierzu ist es auch möglich, beim Hersteller das komplette Trocknermodul 126 unter Einbeziehung der vormontierten Einheit aus Bodenrahmen 130 und Fördervorrichtung 138 herzustellen und anschließend das komplette Trocknermodul 126 an den Installationsort des Trockners 100 zu transportieren und dort mit weiteren Trocknermodulen 126 zu dem fertigen Trockner 100 zusammenzusetzen.

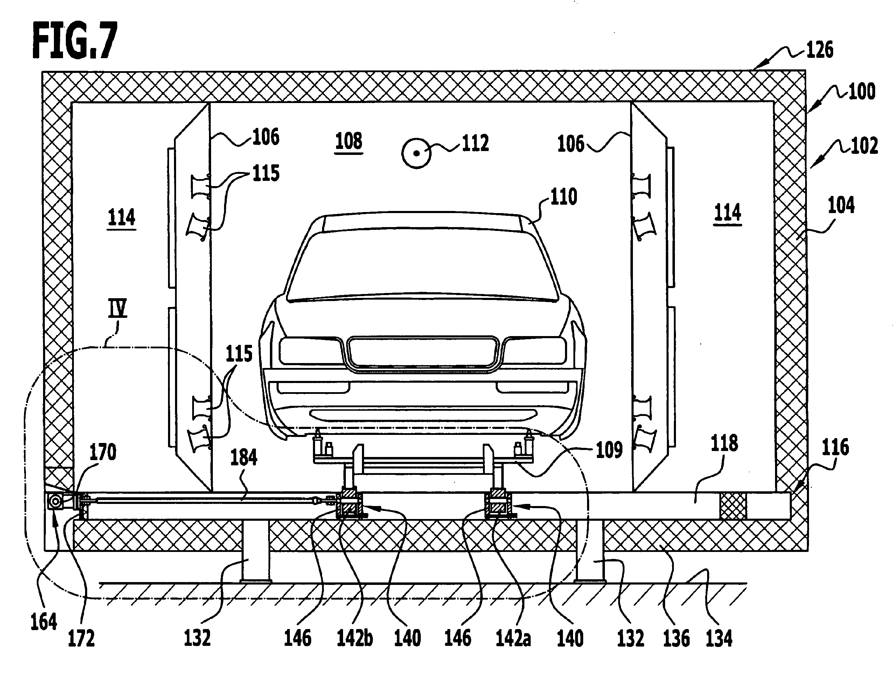

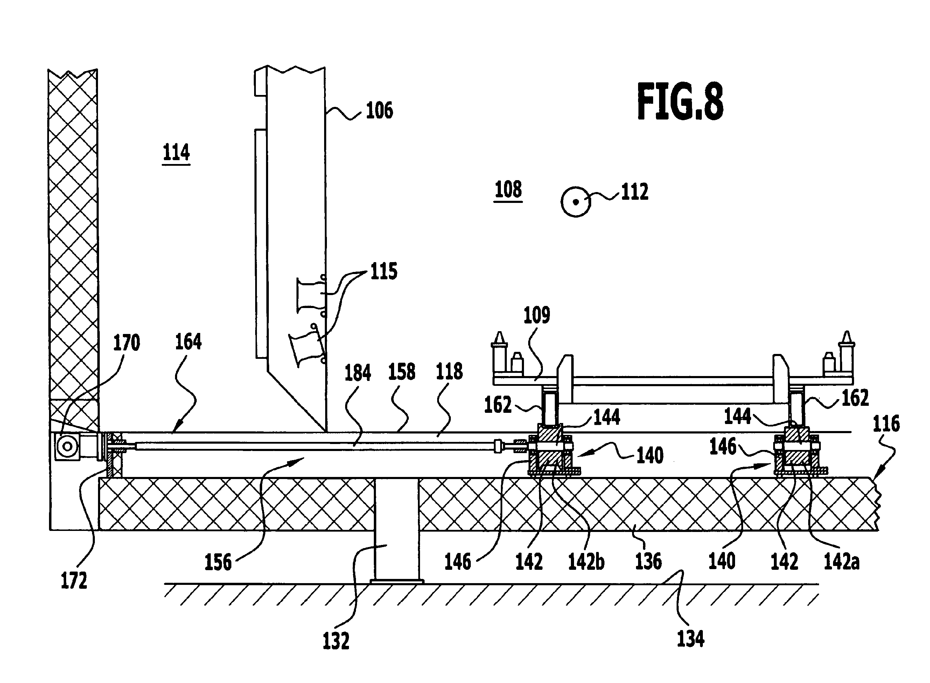

Eine in den Fig. 7 und 8 dargestellte zweite Ausführungsform eines Trockners 100 unterscheidet sich von der vorstehend beschriebenen ersten Ausführungsform dadurch, dass von jedem Paar von Tragrollen 142, die einem Bodenelement 118 zugeordnet sind, jeweils nur eine Tragrolle 142, nämlich die näher an der Getriebeeinheit 170 angeordnete Tragrolle 142b, mittels der Antriebsvorrichtung 164 zu einer Drehbewegung um ihre Drehachse 152 angetrieben wird.

Die weiter von der Getriebeeinheit 170 entfernte Tragrolle 142a wird hingegen nicht angetrieben, sondern dreht sich lediglich aufgrund der Reibung zwischen den Kufen 162 der Skidrahmen 109 und der Umfangsfläche der Tragrolle 142a mit, wenn der Skidrahmen 109 mittels der angetriebenen Tragrollen 142b in der Förderrichtung 112 bewegt wird.

Bei dieser Ausführungsform dienen die nicht angetriebenen Tragrollen 142a also nur dazu, die Skidrahmen 109 mit den daran angeordneten Fahrzeugkarosserien 110 abzustützen, nicht aber dazu, die Skidrahmen 109 anzutreiben.

Die bei der ersten Ausführungsform vorgesehene Querverbindungswelle 198 zwischen den beiden Tragrollen 142a und 142b entfällt daher.

Im übrigen stimmt die in den Fig. 7 und 8 dargestellte zweite Ausführungsform hinsichtlich Aufbau, Funktion und Montageweise mit der in den Fig. 1 bis 6 dargestellten ersten Ausführungsform überein, auf deren vorstehende Beschreibung insoweit Bezug genommen wird.

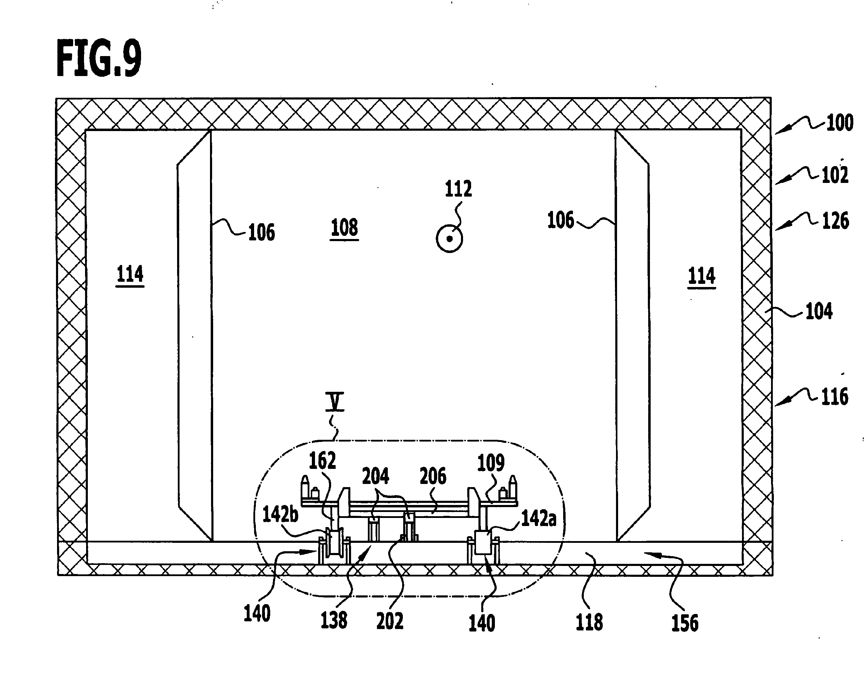

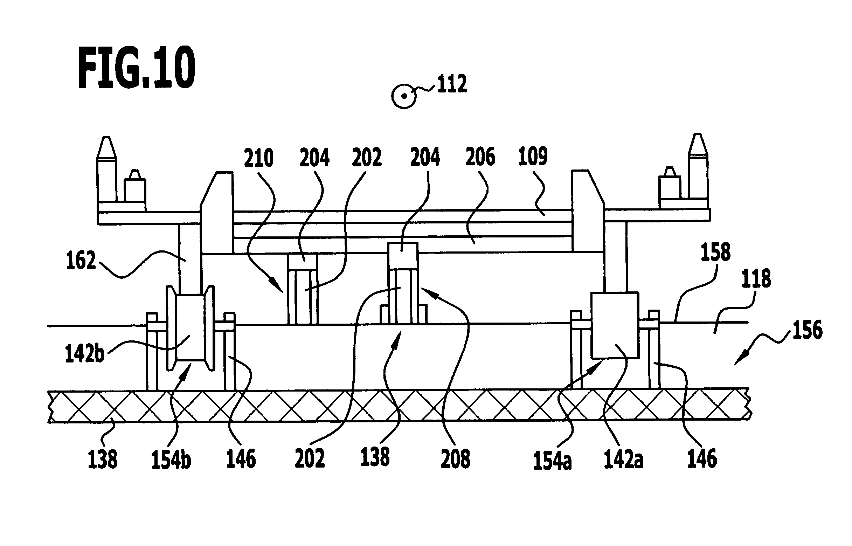

Eine in den Fig. 9 und 10 dargestellte dritte Ausführungsform eines Trockners 100 unterscheidet sich von den vorstehend beschriebenen Ausführungsformen dadurch, dass weder die linken Tragrollen 142a noch die rechten Tragrollen 142b zu einer Drehbewegung angetrieben werden, sondern alle Tragrollen 142 nur noch die Aufgabe haben, die Skidrahmen 109 mit den daran angeordneten Fahrzeugkarosserien 110 abzustützen und bei einer Bewegung längs der Förderrichtung 112 seitlich zu führen.

Folglich entfällt bei dieser Ausführungsform die Antriebsvorrichtung 164 zum Antreiben einer Drehbewegung der Tragrollen 142 vollständig.

Vielmehr wird der Antrieb der Translationsbewegung der Skidrahmen 109 mit den darauf angeordneten Fahrzeugkarosserien 110 in der Förderrichtung 112 mittels eines längs der Förderrichtung 112 umlaufenden Zugmittels in Form einer Kette 202 bewirkt, welche längs der Kette 202 voneinander beabstandete Mitnehmer 204 aufweist, die zwischen einer Koppelstellung, in welcher der Mitnehmer 204 an einer Quertraverse 206 jeweils eines Skidrahmens 109 angreifen kann, um den betreffenden Skidrahmen 109 in der Kettenbewegungsrichtung zu ziehen, und einer Ruhestellung, in welcher der Mitnehmer 204 so flachgelegt ist, dass er unter den Quertraversen 206 der Skidrahmen 109 durchläuft, ohne dieselben zu berühren, verschwenkbar sind.

Die Kette 202 durchläuft einen Kettenvorlauf 208, welcher sich ungefähr mittig zwischen den Tragrollenreihen 154a und 154b längs der Förderrichtung 112 erstreckt und in welchem sich die Kette, die an (nicht dargestellten) Führungsschienen geführt ist, in der Förderrichtung 112 bewegt und die Mitnehmer 204 der Kette 202 sich in der Koppelstellung befinden, eine im Ausgangsbereich des Trockners 100 angeordnete (nicht dargestellte) Spann- und Antriebsstation, einen zwischen dem Kettenvolauf 208 und der Tragrollenreihe 154b angeordneten Kettenrücklauf 210, in welchem sich die Kette entgegen der Förderrichtung 112 bewegt und die Mitnehmer 204 der Kette 202 sich in der Ruhestellung befinden, und eine im Eingangsbereich des Trockners 100 angeordnete (nicht dargestellte) Umlenkstation, an welche sich wiederum der Kettenvorlauf 208 anschließt, so dass die ringförmig geschlossene Kette 202 kontinuierlich durch den Trockner 100 umläuft.

Im übrigen stimmt die in den Fig. 9 und 10 dargestellte dritte Ausführungsform eines Trockners 100 hinsichtlich Aufbau, Funktion und Montageweise mit der in den Fig. 1 bis 6 dargestellten ersten Ausführungsform überein, auf deren vorstehende Beschreibung insoweit Bezug genommen wird.

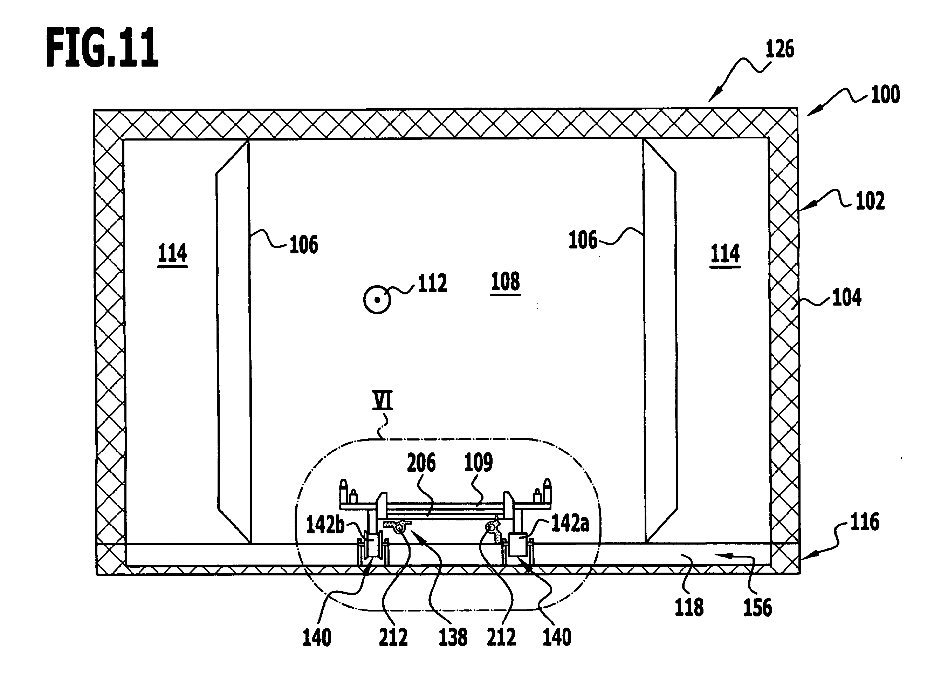

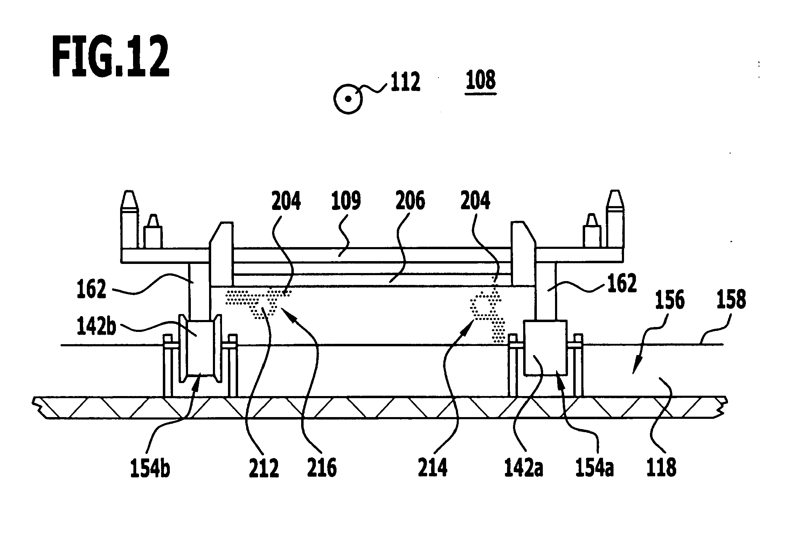

Eine in den Fig. 11 und 12 dargestellte vierte Ausführungsform eines Trockners 100 unterscheidet sich von der In den Fig. 9 und 10 dargestellten dritten Ausführungsform dadurch, dass als Zugmittel für den Antrieb der Translationsbewegung der Skidrahmen 109 mit den darauf angeordneten Fahrzeugkarosserien 110 statt einer Kette 202 ein Seil 212, insbesondere ein Stahlsell, mit längs des Seiles 212 im Abstand voneinander angeordneten Mitnehmern 204 verwendet wird.

Auch in diesem Fall sind die Mitnehmer 204 von einer Koppeistellung, in welcher sie sich an der Quertraverse 206 eines Skidrahmens 109 einhaken und so den Skidrahmen 109 in der Förderrichtung 112 ziehen können, und einer Ruhestellung, in welcher die Mitnehmer 204 so flachgelegt sind, dass sie unter den Quertraversen 206 der Skidrahmen 109 hindurchlaufen, ohne dieselben zu berühren, verschwenkbar.

Das Seil 212 durchläuft bei dieser Ausführungsform einen sich zwischen den Tragrollenreihen 154a, 154b, nahe der linken Tragrollenreihe 154a längs der Förderrichtung 112 erstreckenden Seilvorlauf 214, in dessen Bereich die Mitnehmer 204 sich in der Koppeistellung befinden, eine in einem Ausgangsbereich des Trockners 100 angeordnete (nicht dargestellte) Spann- und Antriebsstation, einen sich zwischen den Tragrollenreihen 154a, 154b, nahe der rechten Tragrollenreihe 154b längs der Förderrichtung 112 erstreckenden Seilrücklauf 216, in dessen Bereich die Mitnehmer 204 sich in der Ruhestellung befinden, und eine in einem Eingangsbereich des Trockners 100 angeordnete Umlenkstation, an welche sich der Seilvorlauf 214 anschließt, so dass das ringförmig geschlossene Seil 212 kontinuierlich durch den Trockner 100 umläuft.

Dabei ziehen die sich im Seilvorlauf 214 befindenden Mitnehmer 204, die an jeweils einer Quertraverse 206 eines Skidrahmens 109 angreifen, die Skidrahmen 109 in der Förderrichtung 112.

Im übrigen stimmt die in den Fig. 11 und 12 dargestellte vierte Ausführungsform eines Trockners 100 hinsichtlich Aufbau, Funktion und Montageweise mit der in den Fig. 9 und 10 dargestellten dritten Ausführungsform überein, auf deren vorstehende Beschreibung insoweit Bezug genommen wird.

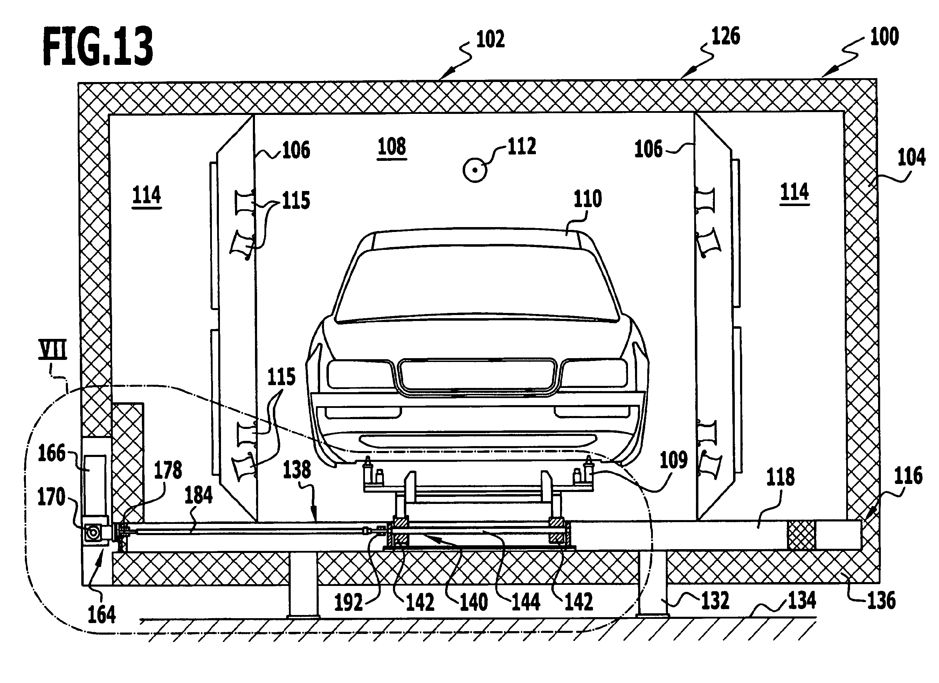

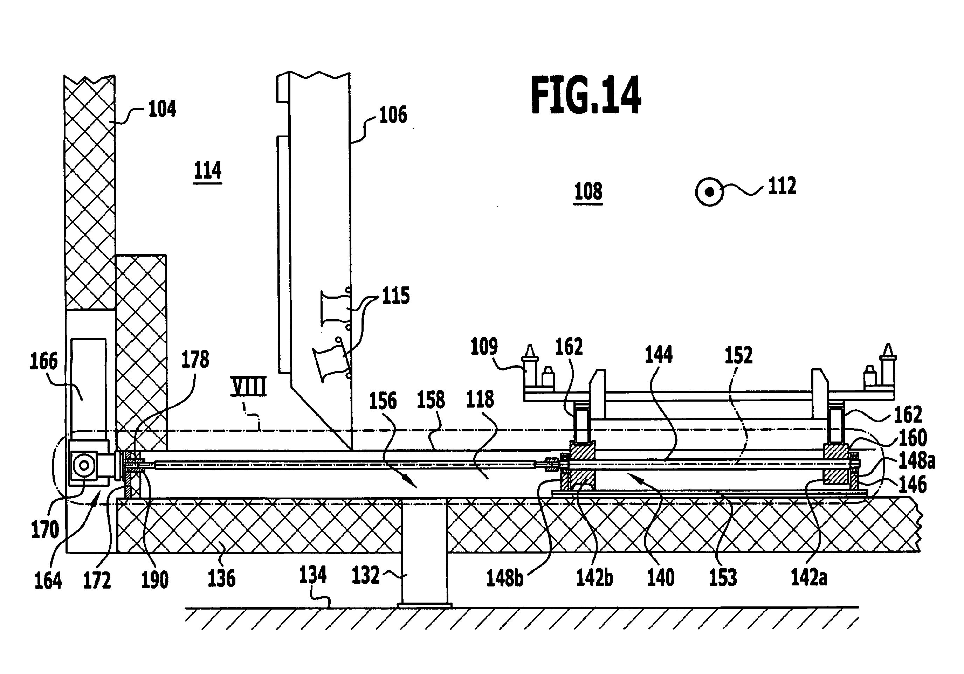

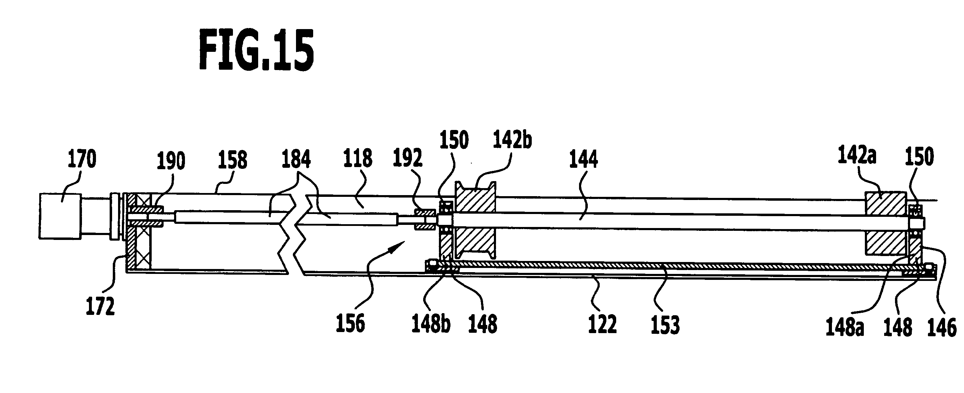

Eine in den Fig. 13 bis 15 dargestellte fünfte Ausführungsform eines Trockners 100 unterscheidet sich von der in den Fig. 1 bis 6 dargestellten Ausführungsform dadurch, dass jede der in der Förderrichtung 112 aufeinanderfolgenden Tragrolleneinheiten 140 nicht nur eine einzige Tragrolle 142a bzw. 142b, sondern sowohl die (in der Förderrichtung 112 gesehen) linke Tragrolle 142a als auch die rechte Tragrolle 142b eines Tragrollenpaares umfasst.

Bei dieser Ausführungsform sind beide Tragrollen 142a, 142b drehfest an einer gemeinsamen Tragrollenwelle 144 angeordnet, welche an den beiden Schenkeln 148 eines Rollenbocks 146 der Tragrolleneinheit 140 mittels Kugellagern 150 um eine horizontale, senkrecht zur Förderrichtung 112 verlaufende Drehachse 152 drehbar gelagert ist

Wie aus den Fig. 13 bis 15 zu entnehmen ist, ist dabei der (in der Förderrichtung 112 gesehen) linke Schenkel 148a des Rollenbocks 146 links von der linken Tragrolle 142a und der rechte Schenkel 148b des Rollenbocks 146 rechts von der rechten Tragrolle 142b angeordnet.

Beide Schenkel 148a, 148b des Rollenbocks 146 erstrecken sich von einer gemeinsamen horizontalen Grundplatte 153 aus nach oben, welche sich in der Längsrichtung des Bodenelements 118 über den gesamten Zwischenraum zwischen den Tragrollen 142a, 142b hinweg erstreckt.

Diese Grundplatte ist mit dem Steg 122 des betreffenden Bodenelements 118 verschraubt.

Bei dieser Ausführungsform ist also an jedem der Bodenelemente 118 jeweils nur eine Tragrolleneinheit 140 lösbar festgelegt.

Die gemeinsame Tragrollenwelle 144 ist über eine, vorzugsweise flexible, Kupplung 192 drehfest mit der Querverbindungswelle 184 verbunden, über welche die gemeinsame Tragrolleriwelle 144 und damit beide Tragrollen- 142a, 142b mittels der Antriebsvorrichtung 164 zu einer Drehbewegung angetrieben werden, wie bei der vorstehend beschriebenen ersten Ausführungsform.

Da bei der in den Fig. 13 bis 15 dargestellten fünften Ausführungsform beide Tragrollen, die demselben Bodenelement 118 zugeordnet sind, auf derselben Tragrollenwelle 144 sitzen, entfällt bei dieser Ausführungsform die Querverbindungswelle 198 der ersten Ausführungsform samt ihrer Kupplungen 192.

Im übrigen stimmt die in den Fig. 13 bis 15 dargestellte fünfte Ausführungsform eines Trockners 100 hinsichtlich Aufbau, Funktion und Montageweise mit der in den Fig. 1 bis 6 dargestellten ersten Ausführungsform überein, auf deren vorstehende Beschreibung insoweit Bezug genommen wird.

## Patentansprüche

1. Trockner zum Trocknen von oberflächenbehandelten Werkstücken, insbesondere Fahrzeugkarosserien (110), die auf jeweils einem Werkstückträger (109) angeordnet sind,
umfassend ein Trocknergehäuse (102) mit einem Trocknertunnel (108), durch welchen die Werkstücke längs einer Förderrichtung (112) hindurchbewegt werden und welcher nach unten durch einen Trocknerboden (116) begrenzt wird, der mehrere Bodenelemente (118) umfasst, und
eine Fördervorrichtung (138), welche die Werkstücke durch den Trocknertunnel (108) hindurchfördert,
wobei die Fördervorrichtung (138) mehrere in der Förderrichtung (112) aufeinanderfolgende Tragrolleneinheiten (140) umfasst, welche jeweils mindestens eine Tragrolle (142) aufweisen, auf welcher die Werkstückträger (109) beim Transport durch den Trocknertunnel (108) aufliegen,
**dadurch gekennzeichnet,**
**dass** die Tragrolleneinheiten (140) in den Trocknerboden (116) integriert sind, separat an jeweils einem Bodenelement (118) des Trocknerbodens (116) montiert sind und mit dem jeweiligen Bodenelement (118) eine vormontierte Einheit bilden.

2. Trockner nach Anspruch 1, **dadurch gekennzeichnet, dass** die Tragrolleneinheiten (140) jeweils nur eine Tragrolle (142) aufweisen.

3. Trockner nach Anspruch 1, **dadurch gekennzeichnet, dass** die Tragrolleneinheiten (140) jeweils genau zwei Tragrollen (142a, 142b) aufweisen, welche im wesentlichen koaxial zueinander angeordnet sind.

4. Trockner nach einem der Ansprüche 1 bis 3, **dadurch gekennzeichnet, dass** die Bodenelemente (118) tragende Elemente des Trocknerbodens (116) sind.

5. Trockner nach einem der Ansprüche 1 bis 4, **dadurch gekennzeichnet, dass** die Bodenelemente (118) als Profilelemente ausgebildet sind.

6. Trockner nach Anspruch 5, **dadurch gekennzeichnet, dass** die Bodenelemente (118) einen U-förmigen oder einen hutförmigen Querschnitt aufweisen.

7. Trockner nach einem der Ansprüche 1 bis 6, **dadurch gekennzeichnet, dass** an den Bodenelementen (118) Füße (132) festgelegt sind, mit denen sich der Trockner (100) an einem Untergrund (134) abstützt.

8. Trockner nach einem der Ansprüche 1 bis 7, **dadurch gekennzeichnet, dass** die Bodenelemente (118) jeweils eine Aufnahme (156) aufweisen, in welcher eine dem jeweiligen Bodenelement (118) zugeordnete Tragrolleneinheit (140) zumindest teilweise aufgenommen ist.

9. Trockner nach einem der Ansprüche 1 bis 8, **dadurch gekennzeichnet, dass** sich die Bodenelemente (118) quer, vorzugsweise im wesentlichen senkrecht, zur Förderrichtung (112) erstrecken.

10. Trockner nach einem der Ansprüche 1 bis 9, **dadurch gekennzeichnet, dass** mehrere Bodenelemente (118), an denen jeweils mindestens eine Tragrolleneinheit (140) montiert ist, mittels mindestens eines Versteifungselements (128) miteinander verbunden sind.

11. Trockner nach einem der Ansprüche 1 bis 10, **dadurch gekennzeichnet, dass** die Tragrolleneinheiten (140) lösbar an dem jeweils zugeordneten Bodenelement (118) montiert sind.

12. Trockner nach einem der Ansprüche 1 bis 11, **dadurch gekennzeichnet, dass** die Bodenelemente (118) mit einer Abdeckung (158) versehen sind, welche jeweils mindestens eine Durchtrittsöffnung (160) für eine Tragrolle (142) einer Tragrolleneinheit (140) aufweist.

13. Trockner nach Anspruch 12, **dadurch gekennzeichnet, dass** die Abdeckung (158) von dem jeweils zugeordneten Bodenelement (118) abnehmbar ist.

14. Trockner nach einem der Ansprüche 1 bis 13, **dadurch gekennzeichnet, dass** die Tragrolleneinheiten (140) jeweils mindestens eine Tragrollenwelle (144) umfassen, die für Wartungszwecke lösbar an einem Rollenbock (146) gelagert ist.

15. Trockner nach Anspruch 14, **dadurch gekennzeichnet, dass** die Tragrollenwellen (144) jeweils ein Wellenprofil (196) und eine lösbar an dem Wellenprofil (196) festgelegte, insbesondere festgeschraubte, Hülse (194) aufweisen.

16. Trockner nach Anspruch 15, **dadurch gekennzeichnet, dass** die Tragrollenwellen (144) nach Lösen der mindestens einen Hülse (194) aus dem jeweils zugeordneten Rollenbock (146) entnehmbar sind.

17. Trockner nach einem der Ansprüche 1 bis 16, **dadurch gekennzeichnet, dass** die Fördervorrichtung (138) eine Antriebsvorrichtung (164) zum Antreiben mindestens einer Tragrolle (142) einer Tragrolleneinheit (140) zu einer Drehbewegung umfasst.

18. Trockner nach Anspruch 17, **dadurch gekennzeichnet, dass** die Antriebsvorrichtung (164) einen Antriebsmotor (166) umfasst.

19. Trockner nach Anspruch 18, **dadurch gekennzeichnet, dass** der Antriebsmotor (166) außerhalb des Trocknergehäuses (102) angeordnet ist.

20. Trockner nach einem der Ansprüche 18 oder 19, **dadurch gekennzeichnet, dass** für jede angetriebene Tragrolle (142) jeweils ein gesonderter Antriebsmotor (166) vorgesehen ist.

21. Trockner nach einem der Ansprüche 18 oder 19, **dadurch gekennzeichnet, dass** mehrere angetriebene Tragrollen (142) mittels desselben Antriebsmotors (166) angetrieben werden.

22. Trockner nach einem der Ansprüche 18 bis 21, **dadurch gekennzeichnet, dass** der Antriebsmotor (166) mehrere Abtriebswellen (168) aufweist.

23. Trockner nach einem der Ansprüche 18 bis 22, **dadurch gekennzeichnet, dass** die Antriebsvorrichtung (164) mindestens eine Verbindungswelle (180, 184, 198) umfasst.

24. Trockner nach Anspruch 23, **dadurch gekennzeichnet, dass** mindestens eine der Verbindungswellen (184, 198) quer, vorzugsweise im wesentlichen senkrecht, zu der Förderrichtung (112) ausgerichtet ist.

25. Trockner nach einem der Ansprüche 23 oder 24, **dadurch gekennzeichnet, dass** mindestens eine der Verbindungswellen (180) im wesentlichen parallel zur Förderrichtung (112) ausgerichtet ist.

26. Trockner nach einem der Ansprüche 23 bis 25, **dadurch gekennzeichnet, dass** mindestens eine der Verbindungswellen (184) außerhalb des Trocknergehäuses (102) angeordnet ist.

27. Trockner nach einem der Ansprüche 23 bis 26, **dadurch gekennzeichnet, dass** mindestens eine der Verbindungswellen (198) zwischen zwei Tragrollen (142) angeordnet ist.

28. Trockner nach einem der Ansprüche 23 bis 27, **dadurch gekennzeichnet, dass** mindestens eine der Verbindungswellen (180, 184, 198) über mindestens eine flexible Kupplung (182, 190, 192) mit einer Tragrolle (142) oder mit einem Antriebsmotor (166) oder mit einer Getriebeeinheit (170) verbunden ist.

29. Trockner nach einem der Ansprüche 17 bis 28, **dadurch gekennzeichnet, dass** die Antriebsvorrichtung (164) mindestens eine Getriebeeinheit (170) umfasst.

30. Trockner nach Anspruch 29, **dadurch gekennzeichnet, dass** die Getriebeeinheit (170) an einem Wandelement (172) des Trocknergehäuses (102) angeordnet ist.

31. Trockner nach Anspruch 30, **dadurch gekennzeichnet, dass** das Wandelement (172) im wesentlichen gasdicht mit einem der Bodenelemente (118) des Trocknerbodens (116) verbunden, vorzugsweise verschweißt, ist.

32. Trockner nach einem der Ansprüche 30 oder 31, **dadurch gekennzeichnet, dass** das Wandelement (172) mit einer Wärmeisolierung versehen ist.

33. Trockner nach einem der Ansprüche 29 bis 32, **dadurch gekennzeichnet, dass** die Getriebeeinheit (170) als eine Winkelgetriebeeinheit ausgebildet ist.

34. Trockner nach einem der Ansprüche 17 bis 33, **dadurch gekennzeichnet, dass** die Antriebsvorrichtung (164) mindestens eine Wellendichtung zum im wesentlichen gasdichten Abdichten einer durch ein Wandelement (172) des Trocknergehäuses (102) hindurchtretenden Welle (178) aufweist.

35. Trockner nach einem der Ansprüche 1 bis 16, **dadurch gekennzeichnet, dass** die Fördervorrichtung (138) mindestens ein Zugmittel umfasst, an welches die Werkstückträger (109) ankoppelbar sind.

36. Trockner nach Anspruch 35, **dadurch gekennzeichnet, dass** das Zugmittel mindestens einen Mitnehmer (204) umfasst, der in einer Koppelstellung an jeweils einem Werkstückträger (109) angreift.

37. Trockner nach Anspruch 36, **dadurch gekennzeichnet, dass** der Mitnehmer (204) von der Koppelstellung in eine Ruhestellung bringbar ist, in welcher er nicht an den Werkstückträgern (109) angreift.

38. Trockner nach einem der Ansprüche 35 bis 37, **dadurch gekennzeichnet, dass** das Zugmittel als eine Kette (202) oder als ein Seil (212) ausgebildet ist.

39. Trockner nach einem der Ansprüche 35 bis 38, **dadurch gekennzeichnet, dass** der Zugmittelvorlauf (208; 214) und/oder der Zugmittelrücklauf (210; 216) - in der Draufsicht von oben gesehen - zwischen den seitlichen Rändern der Werkstückträger (109) verläuft.

40. Trockner nach einem der Ansprüche 35 bis 39, **dadurch gekennzeichnet, dass** die Tragrollen (142) der Fördervorrichtung (138) in zwei im wesentlichen parallel zur Förderrichtung (112) verlaufenden Tragrollenreihen (154a, 154b) angeordnet sind und dass der Zugmittelvorlauf (208; 214) und/oder der Zugmittelrücklauf (210; 216) - in der Draufsicht von oben gesehen - zwischen den beiden Tragrollenreihen (154a, 154b) verläuft.

41. Trockner nach einem der Ansprüche 1 bis 40, **dadurch gekennzeichnet, dass** die Fördergeschwindigkeit der Werkstücke längs der Förderrichtung (112) variabel ist.

42. Trockner nach einem der Ansprüche 1 bis 41, **dadurch gekennzeichnet, dass** der Trockner (100) mehrere in der Förderrichtung (112) aufeinanderfolgende Abschnitte umfasst, wobei die Fördergeschwindigkeit der Werkstücke längs der Förderrichtung (112) von Abschnitt zu Abschnitt variiert.

43. Trockner nach einem der Ansprüche 41 oder 42, **dadurch gekennzeichnet, dass** die Fördergeschwindigkeit der Werkstücke in dem Trocknertunnel (108) längs der Förderrichtung (112) zunimmt.

44. Trockner nach einem der Ansprüche 1 bis 42, **dadurch gekennzeichnet, dass** der Trockner (100) in seinem Eingangsbereich und/oder in seinem Ausgangsbereich mit einer Schnellabzugsrollenbahn versehen ist.

45. Verfahren zur Montage eines Trockners (100) zum Trocknen von oberflächenbehandelten Werkstücken, insbesondere Fahrzeugkarosserien, die auf jeweils einem Werkstückträger (109) angeordnet sind, umfassend die folgenden Verfahrensschritte:
- Montieren von mehreren in einer Förderrichtung (112) aufeinanderfolgenden Tragrolleneinheiten (140), welche jeweils mindestens eine Tragrolle (142) aufweisen, auf welcher die Werkstückträger (109) beim Transport durch einen Trocknertunnel (108) des Trockners (100) aufliegen, an jeweils einem Bodenelement (118) eines Trocknerbodens (116) des Trockners (100);
- anschließendes Herstellen des Trockners (100) unter Verwendung der aus den Bodenelementen (118) und den daran angeordneten Tragrolleneinheiten (140) gebildeten vormontierten Einheiten.

## Claims

1. Drier for drying surface-treated workpieces, in particular vehicle bodies (110), which are each disposed on a respective workpiece carrier (109),
comprising a drier housing (102) having a drier tunnel (108), through which the workpieces are moved along a conveying direction (112) and which is delimited in a downward direction by a drier floor (116) comprising a plurality of floor elements (118), and
a conveying device (138) that conveys the workpieces through the drier tunnel (108),
wherein the conveying device (138) comprises a plurality of carrying roller units (140), which are disposed successively in the conveying direction (112) and each comprise at least one carrying roller (142), on which the workpiece carriers (109) rest as they are conveyed through the drier tunnel (108),
**characterised in that**
the carrying roller units (140) are integrated in the drier floor (116), are mounted separately on a respective floor element (118) of the drier floor (116) and form with the respective floor element (118) a preassembled unit.

2. Drier according to claim 1, **characterized in that** the carrying roller units (140) each comprise only one carrying roller (142).

3. Drier according to claim 1, **characterized in that** the carrying roller units (140) each comprise exactly two carrying rollers (142a, 142b), which are disposed substantially coaxially with one another.

4. Drier according to one of claims 1 to 3, **characterized in that** the floor elements (118) are load-bearing elements of the drier floor (116).

5. Drier according to one of claims 1 to 4, **characterized in that** the floor elements (118) take the form of profile elements.

6. Drier according to claim 5, **characterized in that** the floor elements (118) have a U-shaped or a hat-shaped cross section.

7. Drier according to one of claims 1 to 6, **characterized in that** fastened to the floor elements (118) are feet (132), by which the drier (100) is supported on a foundation (134).

8. Drier according to one of claims 1 to 7, **characterized in that** the floor elements (118) each comprise a receiver (156), in which there is at least partially accommodated a carrying roller unit (140) associated with the respective floor element (118).

9. Drier according to one of claims 1 to 8, **characterized in that** the floor elements (118) extend transversely of, preferably substantially at right angles to, the conveying direction (112).

10. Drier according to one of claims 1 to 9, **characterized in that** a plurality of floor elements (118), on each of which at least one carrying roller unit (140) is mounted, are connected to one another by means of at least one stiffening element (128).

11. Drier according to one of claims 1 to 10, **characterized in that** the carrying roller units (140) are mounted detachably on the respectively associated floor element (118).

12. Drier according to one of claims 1 to 11, **characterized in that** the floor elements (118) are provided with a cover (158), which has in each case at least one through-opening (160) for a carrying roller (142) of a carrying roller unit (140).

13. Drier according to claim 12, **characterized in that** the cover (158) is removable from the respectively associated floor element (118).

14. Drier according to one of claims 1 to 13, **characterized in that** the carrying roller units (140) each comprise at least one carrying roller shaft (144) that is mounted on a roller block (146) so as to be detachable for maintenance purposes.

15. Drier according to claim 14, **characterized in that** the carrying roller shafts (144) each comprise a shaft profile (196) and a sleeve (194), which is detachably fastened, in particular screw-fastened, to the shaft profile (196).

16. Drier according to claim 15, **characterized in that** the carrying roller shafts (144) after detachment of the at least one sleeve (194) are removable from the respectively associated roller block (146).

17. Drier according to one of claims 1 to 16, **characterized in that** the conveying device (138) comprises a drive device (164) for setting at least one carrying roller (142) of a carrying roller unit (140) in rotation.

18. Drier according to claim 17, **characterized in that** the drive device (164) comprises a drive motor (166).

19. Drier according to claim 18, **characterized in that** the drive motor (166) is disposed outside of the drier housing (102).

20. Drier according to one of claims 18 or 19, **characterized in that** for each driven carrying roller (142) in each case a separate drive motor (166) is provided.

21. Drier according to one of claims 18 or 19, **characterized in that** a plurality of driven carrying rollers (142) are driven by means of the same drive motor (166).

22. Drier according to one of claims 18 to 21, **characterized in that** the drive motor (166) has a plurality of driven shafts (168).

23. Drier according to one of claims 18 to 22, **characterized in that** the drive device (164) comprises at least one connection shaft (180, 184, 198).

24. Drier according to claim 23, **characterized in that** at least one of the connection shafts (180, 198) is orientated transversely of, preferably substantially at right angles to, the conveying direction (112).

25. Drier according to one of claims 23 or 24, **characterized in that** at least one of the connection shafts (180) is aligned substantially parallel to the conveying direction (112).

26. Drier according to one of claims 23 to 25, **characterized in that** at least one of the connection shafts (184) is disposed outside of the drier housing (102).

27. Drier according to one of claims 23 to 26, **characterized in that** at least one of the connection shafts (198) is disposed between two carrying rollers (142).

28. Drier according to one of claims 23 to 27, **characterized in that** at least one of the connection shafts (180, 184, 198) is connected by at least one flexible coupling (182, 190, 192) to a carrying roller (142) or to a drive motor (166) or to a gear unit (170).

29. Drier according to one of claims 17 to 28, **characterized in that** the drive device (164) comprises at least one gear unit (170).

30. Drier according to claim 29, **characterized in that** the gear unit (170) is disposed on a wall element (172) of the drier housing (102).

31. Drier according to claim 30, **characterized in that** the wall element (172) is connected, preferably welded, in a substantially gastight manner to one of the floor elements (118) of the drier floor (116).

32. Drier according to one of claims 30 or 31, **characterized in that** the wall element (172) is provided with heat insulation.

33. Drier according to one of claims 29 to 32, **characterized in that** the gear unit (170) takes the form of an angular gear unit.

34. Drier according to one of claims 17 to 33, **characterized in that** the drive device (164) has at least one shaft seal for effecting the substantially gastight sealing of a shaft (178) that extends through a wall element (172) of the drier housing (102).

35. Drier according to one of claims 1 to 16, **characterized in that** the conveying device (138) comprises at least one traction means, to which the workpiece carriers (109) may be coupled.

36. Drier according to claim 35, **characterized in that** the traction means comprises at least one driver (204), which in a coupled position acts upon in each case one workpiece carrier (109).

37. Drier according to claim 36, **characterized in that** the driver (204) is movable from the coupled position into an inoperative position, in which it does not act upon the workpiece carriers (109).

38. Drier according to one of claims 35 to 37, **characterized in that** the traction means takes the form of a chain (202) or a rope (212).

39. Drier according to one of claims 35 to 38, **characterized in that** the traction means forward run (208; 214) and/or the traction means return run (210; 216) - seen from above in plan view - extends between the lateral edges of the workpiece carriers (109).

40. Drier according to one of claims 35 to 39, **characterized in that** the carrying rollers (142) of the conveying device (138) are disposed in two carrying roller rows (154a, 154b) extending substantially parallel to the conveying direction (112) and that the traction means forward run (208; 214) and/or the traction means return run (210; 216) - seen from above in plan view - extends between the two carrying roller rows (154a, 154b).

41. Drier according to one of claims 1 to 40, **characterized in that** the conveying speed of the workpieces along the conveying direction (112) is variable.

42. Drier according to one of claims 1 to 41, **characterized in that** the drier (100) comprises a plurality of sections disposed successively in the conveying direction (112), wherein the conveying speed of the workpieces along the conveying direction (112) varies from section to section.

43. Drier according to one of claims 41 or 42, **characterized in that** the conveying speed of the workpieces in the drier tunnel (108) increases along the conveying direction (112).

44. Drier according to one of claims 1 to 42, **characterized in that** the drier (100) in its entry region and/or in its exit region is provided with a rapid-removal roller conveyor.

45. Method of assembling a drier (100) for drying surface-treated workpieces, in particular vehicle bodies, which are each disposed on a respective workpiece carrier (109), comprising the following method steps:
- mounting a plurality of carrying roller units (140), which are disposed successively in a conveying direction (112) and each comprise at least one carrying roller (142), on which the workpiece carriers (109) rest as they are conveyed through a drier tunnel (108) of the drier (100), on a respective floor element (118) of a drier floor (116) of the drier (100);
- subsequently manufacturing the drier (100) using the preassembled units formed by the floor elements (118) and the carrying roller units (140) disposed thereon.

## Revendications

1. Séchoir servant à sécher des pièces traitées en surface, en particulier des carrosseries de véhicule (110), qui sont disposées sur respectivement un support de pièces (109),
comprenant un boîtier de séchoir (102) doté d'un tunnel de séchoir (108), à travers lequel les pièces sont déplacées le long d'un sens d'acheminement (112) et qui est délimité vers le bas par un fond de séchoir (116), qui comprend plusieurs éléments de fond (118), et
comprenant un dispositif d'acheminement (138) qui transporte les pièces à travers le tunnel de séchoir (108),
le dispositif d'acheminement (138) comprenant plusieurs unités de rouleaux porteurs (140) se suivant les unes les autres dans le sens d'acheminement (112), lesquelles présentent respectivement au moins un rouleau porteur (142) sur lequel reposent les supports des pièces (109) lors du transport à travers le tunnel de séchoir (108),
**caractérisé en ce**
**que** les unités de rouleaux porteurs (140) sont intégrées dans le fond de séchoir (116), sont montées séparément au niveau respectivement d'un élément de fond (118) du fond de séchoir (116) et forment avec l'élément de fond (118) respectif une unité préalablement montée.

2. Séchoir selon la revendication 1, **caractérisé en ce que** les unités de rouleaux porteurs (140) présentent respectivement uniquement un rouleau porteur (142).

3. Séchoir selon la revendication 1, **caractérisé en ce que** les unités de rouleaux porteurs (140) présentent respectivement précisément deux rouleaux porteurs (142a, 142b), lesquels sont disposés essentiellement de manière coaxiale l'un par rapport à l'autre.

4. Séchoir selon l'une quelconque des revendications 1 à 3, **caractérisé en ce que** les éléments de fond (118) sont des éléments de support du fond de séchoir (116).

5. Séchoir selon l'une quelconque des revendications 1 à 4, **caractérisé en ce que** les éléments de fond (118) sont réalisés sous la forme d'éléments profilés.

6. Séchoir selon la revendication 5, **caractérisé en ce que** les éléments de fond (118) présentent une section transversale en forme de U ou en forme de chapeau.

7. Séchoir selon l'une quelconque des revendications 1 à 6, **caractérisé en ce que** des pieds (132) sont fixés au niveau des éléments de fond (118), lesquels pieds permettent de soutenir le séchoir (100) au niveau d'un sous-sol (134).

8. Séchoir selon l'une quelconque des revendications 1 à 7, **caractérisé en ce que** les éléments de fond (118) présentent respectivement un logement (156), dans lequel est logée au moins en partie une unité de rouleaux porteurs (140) associée à l'élément de fond (118) respectif.

9. Séchoir selon l'une quelconque des revendications 1 à 8, **caractérisé en ce que** les éléments de fond (118) s'étendent de manière transversale, de préférence de manière essentiellement perpendiculaire, par rapport au sens d'acheminement (112).

10. Séchoir selon l'une quelconque des revendications 1 à 9, **caractérisé en ce que** plusieurs éléments de fond (118), au niveau desquels est montée au moins respectivement une unité de rouleaux porteurs (140), sont reliés entre eux au moyen au moins d'un élément de renforcement (128).

11. Séchoir selon l'une quelconque des revendications 1 à 10, **caractérisé en ce que** les unités de rouleaux porteurs (140) sont montées de manière amovible au niveau de l'élément de fond (118) respectivement associé.

12. Séchoir selon l'une quelconque des revendications 1 à 11, **caractérisé en ce que** les éléments de fond (118) sont pourvus d'un élément de revêtement (158), qui présente respectivement au moins une ouverture de passage (160) pour un rouleau porteur (142) d'une unité de rouleaux porteurs (140).

13. Séchoir selon la revendication 12, **caractérisé en ce que** l'élément de revêtement (158) peut être retiré de l'élément de fond (118) respectivement associé.

14. Séchoir selon l'une quelconque des revendications 1 à 13, **caractérisé en ce que** les unités de rouleaux porteurs (140) comprennent respectivement au moins un arbre de rouleaux porteurs (144) qui est logé à des fins de maintenance de manière amovible au niveau d'un support à rouleaux (146).

15. Séchoir selon la revendication 14, **caractérisé en ce que** les arbres de rouleaux porteurs (144) présentent respectivement un profilé d'arbre (196) et un manchon (194) fixé, en particulier serré par vissage, de manière amovible au niveau du profilé d'arbre (196).

16. Séchoir selon la revendication 15, **caractérisé en ce que** les arbres de rouleaux porteurs (144) peuvent être retirés du support à rouleaux (146) respectivement associé après avoir détaché le manchon (194) au moins au nombre d'un.

17. Séchoir selon l'une quelconque des revendications 1 à 16, **caractérisé en ce que** le dispositif convoyeur (138) comporte un dispositif d'entraînement (164) servant à entraîner au moins un rouleau porteur (142) d'une unité de rouleaux porteurs (140) en un mouvement de rotation.

18. Séchoir selon la revendication 17, **caractérisé en ce que** le dispositif d'entraînement (164) comporte un moteur d'entraînement (166).

19. Séchoir selon la revendication 18, **caractérisé en ce que** le moteur d'entraînement (166) est disposé à l'extérieur du boîtier de séchoir (102).

20. Séchoir selon l'une quelconque des revendications 18 ou 19, **caractérisé en ce que** respectivement un moteur d'entraînement (166) séparé est prévu pour chaque rouleau porteur (142) entraîné.

21. Séchoir selon l'une quelconque des revendications 18 ou 19, **caractérisé en ce que** plusieurs rouleaux porteurs (142) entraînés sont entraînés au moyen dudit moteur d'entraînement (166).

22. Séchoir selon l'une quelconque des revendications 18 à 21, **caractérisé en ce que** le moteur d'entraînement (166) présente plusieurs arbres de sortie (168).

23. Séchoir selon l'une quelconque des revendications 18 à 22, **caractérisé en ce que** le dispositif d'entraînement (164) comporte au moins un arbre d'assemblage (180, 184, 198).

24. Séchoir selon la revendication 23, **caractérisé en ce qu'**au moins un des arbres d'assemblage (184, 198) est orienté de manière transversale, de préférence de manière essentiellement perpendiculaire, par rapport au sens d'acheminement (112).

25. Séchoir selon l'une quelconque des revendications 23 ou 24, **caractérisé en ce qu'**au moins un des arbres d'assemblage (180) est orienté essentiellement de manière parallèle par rapport au sens d'acheminement (112).

26. Séchoir selon l'une quelconque des revendications 23 à 25, **caractérisé en ce qu'**au moins un des arbres d'assemblage (184) est disposé à l'extérieur du boîtier de séchoir (102).

27. Séchoir selon l'une quelconque des revendications 23 à 26, **caractérisé en ce qu'**au moins un des arbres d'assemblage (198) est disposé entre deux rouleaux porteurs (142).

28. Séchoir selon l'une quelconque des revendications 23 à 27, **caractérisé en ce qu'**au moins un des arbres d'assemblage (180, 184, 198) est relié par l'intermédiaire au moins d'un dispositif de couplage (182, 190, 192) flexible à un rouleau porteur (142) ou à un moteur d'entraînement (166) ou à une unité d'engrenage (170).

29. Séchoir selon l'une quelconque des revendications 17 à 28, **caractérisé en ce que** le dispositif d'entraînement (164) comprend au moins une unité d'engrenage (170).

30. Séchoir selon la revendication 29, **caractérisé en ce que** l'unité d'engrenage (170) est disposée au niveau d'un élément de paroi (172) du boîtier de séchoir (102).

31. Séchoir selon la revendication 30, **caractérisé en ce que** l'élément de paroi (172) est relié, de préférence est soudé, essentiellement de manière étanche aux gaz à un des éléments de fond (118) du fond de séchoir (116).

32. Séchoir selon l'une quelconque des revendications 30 ou 31, **caractérisé en ce que** l'élément de paroi (172) est pourvu d'une isolation thermique.

33. Séchoir selon l'une quelconque des revendications 29 à 32, **caractérisé en ce que** l'unité d'engrenage (170) est réalisée sous la forme d'une unité d'engrenage d'angle.

34. Séchoir selon l'une quelconque des revendications 17 à 33, **caractérisé en ce que** le dispositif d'entraînement (164) présente au moins un joint d'étanchéité d'arbre servant à assurer l'étanchéité essentiellement par rapport aux gaz d'un arbre (178) traversant l'élément de paroi (172) du boîtier de séchoir (102).

35. Séchoir selon l'une quelconque des revendications 1 à 16, **caractérisé en ce que** le dispositif d'acheminement (138) comporte au moins un moyen de traction, auquel peuvent être couplés les supports de pièces (109).

36. Séchoir selon la revendication 35, **caractérisé en ce que** le moyen de traction comporte au moins un entraîneur (204), lequel vient en prise avec respectivement un support de pièces (109) dans une position de couplage.

37. Séchoir selon la revendication 36, **caractérisé en ce que** l'entraîneur (204) peut être amené depuis une position de couplage dans une position de repos, dans laquelle il ne vient pas en prise avec les supports de pièces (109).

38. Séchoir selon l'une quelconque des revendications 35 à 37, **caractérisé en ce que** le moyen de traction est réalisé sous la forme d'une chaîne (202) ou sous la forme d'une corde (212).

39. Séchoir selon l'une quelconque des revendications 35 à 38, **caractérisé en ce que** l'avancée des moyens de traction (208 ; 214) et/ou le recul de ces derniers (210 ; 216) s'étendent - vu depuis une vue du dessus - entre les bords latéraux des supports de pièces (109).

40. Séchoir selon l'une quelconque des revendications 35 à 39, **caractérisé en ce que** les rouleaux porteurs (142) du dispositif d'acheminement (138) sont disposés dans deux unités de rouleaux porteurs (154a, 154b) s'étendant essentiellement de manière parallèle par rapport au sens d'acheminement (112), et **en ce que** l'avancée des moyens de traction (208 ; 214) et/ou le recul des moyens de traction (210 ; 216) s'étendent - vu depuis une vue du dessus - entre les deux rangées de rouleaux porteurs (154a, 154b).

41. Séchoir selon l'une quelconque des revendications 1 à 40, **caractérisé en ce que** la vitesse d'acheminement des pièces varie le long du sens d'acheminement (112).

42. Séchoir selon l'une quelconque des revendications 1 à 41, **caractérisé en ce que** le séchoir (100) comprend plusieurs sections se suivant les unes les autres dans le sens d'acheminement (112), la vitesse d'acheminement des pièces variant de section en section le long du sens d'acheminement (112).

43. Séchoir selon l'une quelconque des revendications 41 ou 42, **caractérisé en ce que** la vitesse d'acheminement des pièces augmente dans le tunnel de séchoir (108) le long du sens d'acheminement (112).

44. Séchoir selon l'une quelconque des revendications 1 à 42, **caractérisé en ce que** le séchoir (100) est pourvu dans sa zone d'entrée et/ou dans sa zone de sortie d'une bande de rouleaux à retrait rapide.

45. Procédé servant au montage d'un séchoir (100) servant à sécher des pièces traitées en surface, en particulier des carrosseries de véhicules, sur respectivement un support de pièces (109), comprenant les étapes de procédé qui suivent :
- le montage au niveau respectivement d'un élément de fond (118) d'un fond de séchoir (116) du séchoir (100), de plusieurs unités de rouleaux porteurs (140) se suivant les unes les autres dans un sens d'acheminement (112), lesquelles présentent respectivement au moins un rouleau porteur (142), sur lequel reposent les supports de pièces (109) lors du transport à travers un tunnel de séchoir (108) du séchoir (100),
- la fabrication subséquente du séchoir (100) en utilisant les unités préalablement montées formées à partir des éléments de fond (118) et à partir des unités de rouleaux porteurs (140) disposées au niveau desdits éléments de fond.
